# EUROPÄISCHE PATENTSCHRIFT

(11) **EP 4 554 990 B1**
(45) Veröffentlichungstag und Bekanntmachung des Hinweises auf die Patenterteilung: **14.01.2026**
(21) Anmeldenummer: 23741412.3
(22) Anmeldetag: 13.07.2023
(51) Int. Cl.: C08F 265/04, C08F 285/00, C08F 279/04, C08F 6/00, C08F 2/42, C08L 51/04, C08L 55/02

(54) **VERFAHREN ZUR HERSTELLUNG VON ASA- ODER ABS-PFROPFCOPOLYMEREN MIT VERMINDERTER VERFÄRBUNG**
METHOD FOR PRODUCING ASA OR ABS GRAFT COPOLYMERS WITH REDUCED DISCOLORATION
PROCÉDÉ DE PRODUCTION DE COPOLYMÈRES GREFFÉS ASA OU ABS À DÉCOLORATION RÉDUITE

(30) Priorität: 15.07.2022 EP 22185153
(43) Veröffentlichungstag der Anmeldung: 21.05.2025
(73) Patentinhaber: INEOS Styrolution Group GmbH, 60325 Frankfurt (DE)
(72) Erfinder: FISCHER, Wolfgang, 69124 Heidelberg (DE); KLAUCK, Felix, 28011 Madrid (ES); WISSING, Maren, 48143 Münster (DE); RUTHARD, Christian, 55124 Mainz (DE)
(74) Vertreter: Jacobi, Markus Alexander
(86) Internationale Anmeldenummer: PCT/EP2023/069476
(87) Internationale Veröffentlichungsnummer: WO 2024/013297

(56) Entgegenhaltungen:
- EP-A1- 0 093 568
- WO-A1-03/038414
- WO-A1-2015/091817
- WO-A1-2017/055179
- CN-A- 101 104 666

## Beschreibung

Die vorliegende Erfindung betrifft ein Verfahren zur Herstellung von Pfropfcopolymeren mit verminderter Verfärbung, insbesondere verminderter Gelb- oder Rotfärbung, auf der Basis von Acrylnitril-Styrol-Acrylat- (ASA)- oder Acrylnitril-Butadien-Styrol- (ABS)-Pfropfcopolymeren, sowie die nach diesem Verfahren erhaltene Pfropfcopolymere. Weiterhin betrifft die Erfindung ein Verfahren zur Herstellung einer thermoplastischen Formmasse, enthaltend nach dem erfindungsgemäßen Verfahren erhaltene ABS- oder ASA-Pfropfcopolymere, sowie dadurch erhaltene Formmassen.

ABS-Copolymere und ASA-Copolymere werden bereits seit Jahrzehnten in großen Mengen als thermoplastische Formmassen für die Herstellung von Formteilen verschiedener Art eingesetzt. Es ist bekannt, dass Styrol-Acrylnitril (SAN)- und/oder α-Methylstyrol-Acrylnitril (AMSAN)-Copolymere durch Einarbeitung eines oder mehrerer Pfropfkautschuke (im Folgenden auch Pfropfcopolymere genannt), wie z. B. gepfropfte Polybutadien-Kautschuke oder gepfropfte vernetzte Polyacrylate, zur Verbesserung der Schlagzähigkeit modifiziert werden können. Diese schlagzähmodifizierten SAN-Formmassen können durch Polymerisation von Styrol und Acrylnitril in Gegenwart von z.B. einem Polybutadien-Kautschuk und/oder durch anschließendes Mischen eines Pfropfcopolymers mit einer separat hergestellten Styrol-Acrylnitril-Matrix hergestellt werden.

Die Eigenschaftsprofile der Formmassen und der daraus hergestellten Formteile können sehr unterschiedlich ausfallen. Besonders wichtige Eigenschaften von ABS- und ASA-Formmassen sind vorteilhafte mechanische Eigenschaften, wie hohe Zähigkeit und Schlagzähigkeit, gute Verarbeitbarkeit, relativ hohe Wärmebeständigkeit, sowie eine helle Grundfarbe (niedriger Gelbwert), damit das Material in einem breiten Farbspektrum eingefärbt werden kann.

Typischerweise werden die Pfropfkautschuk-Copolymere hergestellt, indem vernetzte Polyacrylat-Latices oder Polybutadien-Latices als Pfropfgrundlagen durch Emulsionspolymerisation hergestellt werden und anschließend eine oder mehrere Pfropfschalen durch Aufpfropfen von Styrol und/oder einer Mischung aus z.B. Styrol und Acrylnitril und gegebenenfalls weiteren Monomeren durch Pfropfemulsionspolymerisation hergestellt werden. Nach der Emulsionspolymerisation wird der Pfropfcopolymer-Latex in der Regel ausgefällt, von der Suspension, abgetrennt, gewaschen und getrocknet (z.B. WO 2015/078751).

In WO 2015/000873 werden Pfropfcopolymer-Latices beschrieben, bei denen auf den Fällungsschritt ein Sinterschritt folgt, bei dem der ausgefällte Pfropfcopolymer-Latex, insbesondere ein ABS-Pfropfcopolymer-Latex, bei einer Temperatur von 100° bis 125°C zu größeren Partikeln agglomeriert wird.

Verfahren zur Herstellung von ASA- oder ABS-Pfropfcopolymeren, umfassend einen Fällungs- und einen Sinterschritt, werden in WO 2020/043690 und WO 2020/020869 beschrieben. In einem ersten Schritt wird der Pfropfcopolymer-Latex mit der Fällungslösung bei einer Temperatur T1 (Fällungstemperatur) im Bereich von 30 bis 80 °C vermischt, und danach wird in einem zweiten Schritt die Fällungsmischung auf einer Temperatur T2 (Sintertemperatur) im Bereich von 70 bis 140 °C für einen Zeitraum von vorzugsweise 2 bis 90 Minuten gehalten. Die Pfropfcopolymere können Additive, vorzugsweise Licht- oder Wärmestabilisatoren enthalten, die bevorzugt vor oder während der Entwässerung des gefällten Pfropfcopolymers, oder alternativ bevorzugt nach oder während der Emulsionspolymerisation zugesetzt werden.

Beispielhaft wird die Herstellung von ASA-Pfropfcopolymere mit 1 oder 2 Propfschalen beschrieben. Letztere werden durch Pfropfemulsionspolymerisation in 2 Stufen erhalten, wobei zunächst auf einen vernetzten Polybutylacrylatkautschuk-Latex Styrol gepfropft, und dann auf diese erste Pfropfschale eine Mischung aus Styrol und Acrylnitril gepfropft wurde. Nach Beendigung der Monomer-Zugabe wurde - ohne Zusatz von Additiven - bei 65°C für 60 Minuten nachpolymerisiert. Der erhaltene ASA-Pfropfcopolymer-Latex (Dv 500 nm) wurde dann bei 60°C bzw. 70°C mit Hilfe von MgSO₄ - ohne Zusatz von weiteren Additiven - gefällt und danach bei 92°C bzw. 130°C 5 Minuten gesintert.

WO 2020/020831 offenbart ebenfalls ASA-Pfropfcopolymere, die eine aus zwei Schichten bestehende Styrol-Acrylnitril-Copolymer-Pfropfhülle aufweisen, wobei die erste Schicht durch Emulsionspolymerisation von Styrol auf einen Polyacrylat-Latex gebildet wurde, und auf den mit Polystyrol gepropften Latex, die zweite Schicht - erhalten durch Emulsionspolymerisation von Styrol und Acrylnitril - gepfropft ist. Die Aufarbeitung der erhaltenen Pfropfcopolymere erfolgte durch Fällung bei 88°C, kurzem Erhitzen auf 99°C, Filtration, Waschen und Trocknung.

Von Nachteil ist, dass die nach den Verfahren gemäß dem Stand der Technik erhaltenen Pfropfcopolymere nach dem Sinterschritt Verfärbungen, insbesondere gelbliche bis rötliche Verfärbungen, aufweisen.

WO 2017/055179 offenbart Verfahren zur Herstellung einer thermoplastischen Formmasse, enthaltend bis zu 40 Gew.-% eines Pfropfcopolymers A, enthaltend 50-70 Gew.- % Pfropfgrundlage A1 aus einem Acrylesterpolymer und 30-50 Gew.-% einer Pfropfhülle A2, und 0-90 Gew.-% einer Hartmatrix B, wobei die Reaktion zur Herstellung des Pfropfcopolymers A in Gegenwart der 0,01- bis 4-fachen Molmenge Natriumcarbonat, bezogen auf die Molmenge Initiator, durchgeführt wird, wobei die Reaktion zur Herstellung des Copolymers A in Gegenwart von 0,1 bis 1 Gew.-% eines Emulgators, bezogen auf die Menge der jeweils eingesetzten Monomere, durchgeführt wird, und wobei während der Polymerisationsreaktion, während der Nachpolymerisation und/oder nach der Polymerisationsreaktion dem Reaktionsgemisch zur Herstellung des Pfropfcopolymers A Wasser oder eine wässrige Alkalilösung zugesetzt werden.

Wünschenswert, auch im Hinblick auf die Herstellung von ABS- oder ASA-Formmassen enthaltend ASA- oder ABS-Pfropfcopolymere und Styrolcopolymere, wie SAN- oder AMSAN-Copolymere, ist es, dass die erhaltenen ASA- oder ABS-Pfropfcopolymere eine helle, bzw. weiße Farbe aufweisen.

Eine Aufgabe der vorliegenden Erfindung ist es daher, ein Verfahren zur Herstellung von ASA- oder ABS-Pfropfcopolymere bereitzustellen, mit dem es gelingt, ASA- oder ABS-Pfropfcopolymere zu erhalten, die keine oder zumindest nur geringe Verfärbungen, und somit eine weiße oder nahezu weiße Farbe, aufweisen.

Es hat sich überraschend gezeigt, dass deutlich weniger verfärbte (helle) Pfropfkautschuke erhalten werden, wenn man mindestens einen Radikalfänger, bevorzugt einen wasserlöslichen Radikalfänger, nach Ende des letzten Monomer-Zulaufs zugibt.

Ein Gegenstand der Erfindung ist ein Verfahren zur Herstellung mindestens eines Pfropfcopolymers B enthaltend (bevorzugt bestehend aus):
B1: 40 bis 90 Gew.-%, bevorzugt 45 bis 85 Gew.-%, besonders bevorzugt 50 bis 70 Gew.-%, bezogen auf das Pfropfcopolymer B, mindestens einer Pfropfgrundlage B1, erhalten durch Emulsionspolymerisation von:
   B11 50 bis 100 Gew.-%, oftmals 80 bis 100 Gew.-%; bevorzugt 90 bis 99,9 Gew.-%, besonders bevorzugt 90 bis 99,0 Gew.-%, bezogen auf die Pfropfgrundlage B1, mindestens einem Monomer B11 ausgewählt aus C₁-C₈-Alkyl(meth)acrylat, bevorzugt n-Butylacrylat, und Butadien;
   B12 0 bis 10 Gew.-%, bevorzugt 0 bis 5 Gew.-%, oftmals 0,1 bis 5 Gew.-%, besonders bevorzugt 0 bis 2,5 Gew.-%, oftmals 1 bis 2,5 Gew.- %, bezogen auf die Pfropfgrundlage B1, mindestens eines mehrfunktionellen Vernetzungsmonomers B12, vorzugsweise ausgewählt aus Allyl(meth)acrylat, Divinylbenzol, Diallylmaleat, Diallylfumarat, Diallylphthalat, Triallylcyanurat, Triallylisocyanurat und Dihydrodicyclopentadienylacrylat (DCPA);
   B13 0 bis 50 Gew.-%, bevorzugt 0 bis 20 Gew.-%, besonders bevorzugt 0 bis 10 Gew.-%, bezogen auf die Pfropfgrundlage B1, mindestens eines weiteren Monomers B13 ausgewählt aus Styrol, alpha-Methylstyrol, C₁-C₄-Alkylstyrol, Acrylnitril, Methacrylnitril, Isopren, Chloropren, Methylmethacrylat, Alkylenglykoldi(meth)acrylat und Vinylmethylether;
   wobei die Summe von B11, B12 und B13 100 Gew.-% ist; und
B2: 10 bis 60 Gew.-%, bevorzugt 15 bis 55 Gew.-%, besonders bevorzugt 30 bis 50 Gew.-%, bezogen auf das Pfropfcopolymer B, mindestens einer, vorzugsweise einer oder zwei, insbesondere zwei, Pfropfhülle B2, die - in Gegenwart der mindestens einen Pfropfgrundlage B1 - erhalten wird durch Emulsionspolymerisation von:
   B21 50 bis 100 Gew.-%, bevorzugt 50 bis 95 Gew.-%, besonders bevorzugt 65 bis 90 Gew.-%, ganz besonders bevorzugt 70 bis 85 Gew.-%, bezogen auf die Pfropfhülle B2, mindestens eines vinylaromatischen Monomeren B21, ausgewählt aus Styrol, alpha-Methylstyrol oder Mischungen aus Styrol und mindestens einem weiteren Monomer ausgewählt aus alpha-Methylstyrol, p-Methylstyrol und C₁-C₈-Alkyl(meth)acrylat, bevorzugt C₁-C₄-Alkyl(meth)acrylat (z.B. Methylmethacrylat oder Ethylmethacrylat); und
   B22 0 bis 50 Gew.-%, bevorzugt 5 bis 50 Gew.-%, besonders bevorzugt 10 bis 35 Gew.-%, ganz besonders bevorzugt 15 bis 30 Gew.-%, bezogen auf die Pfropfhülle B2, mindestens eines Monomers B22 ausgewählt aus Acrylnitril oder Mischungen aus Acrylnitril und mindestens einem weiteren Monomer ausgewählt aus Methacrylnitril, Acrylamid, Vinylmethylether, Anhydriden ungesättigter Carbonsäuren (z.B. Maleinsäureanhydrid oder Phthalsäureanhydrid) und Imiden ungesättigter Carbonsäuren (z.B. N-substituiertes Maleimid wie N-Cyclohexylmaleimid oder N-Phenylmaleimid);
wobei die Summe von B21 und B22 100 Gew.-% ist; und
   wobei mindestens eine Pfropfhülle B2, vorzugsweise die äußerste Pfropfhülle B2, durch Emulsionspolymerisation von 50 bis 95 Gew.-%, bevorzugt 65 bis 90 Gew.- %, besonders bevorzugt 70 bis 85 Gew.-%, mindestens eines Monomers B21 und 5 bis 50 Gew.-%, bevorzugt 10 bis 35 Gew.-%, besonders bevorzugt 15 bis 30 Gew.-%, mindestens eines Monomers B22 erhalten wird;
   wobei die Summe der mindestens einen Pfropfgrundlage B1 und der mindestens einen Pfropfhülle B2 100 Gew.-% ergibt; und wobei
das Verfahren die folgenden Schritte umfasst:
a) Herstellung eines Latex des mindestens einen Pfropfcopolymers B umfassend:
   a1) Zugabe und Emulsionspolymerisation von Monomeren B21 und B22 in Gegenwart der mindestens einen Pfropfgrundlage B1 zur Bildung der mindestens einen Pfropfhülle B2; und
   a2) nach Beendigung der letzten Monomerzugabe in Schritt a1), Zugabe von mindestens einem Radikalfänger;
b) Fällung des in Schritt a) erhaltenen Pfropfcopolymer-B-Latex bei einer Temperatur von 30 bis 95°C, bevorzugt 40 bis 90°C, besonders bevorzugt 50 bis 90°C, ganz besonders bevorzugt 60 bis 88°C, wobei der Pfropfcopolymer-B-Latex mit mindestens einer Fällungslösung PS gemischt wird, wodurch eine Fällungsmischung entsteht;
c) Sinterung der in Schritt b) erhaltenen Fällungsmischung bei einer Temperatur von 85 bis 150°C, vorzugsweise 90 bis 145°C, insbesondere 90 bis 140°C, ganz besonders bevorzugt 92 bis 135°C, bevorzugt für 15 bis 90 Minuten, besonders bevorzugt 15 bis 75 Minuten, insbesondere 20 bis 60 Minuten,
   wobei die Temperatur in Schritt c) mindestens 5°C, bevorzugt mindestens 10°C, besonders bevorzugt 15°C, höher ist als in Schritt b);
d) gegebenenfalls Abkühlen der gesinterten Fällungsmischung aus Schritt c), vorzugsweise auf eine Temperatur von 20 bis 90°C;
e) mechanische Entwässerung der in Schritt c) oder d) erhaltenen gesinterten Fällungsmischung, wobei ein Pfropfcopolymer B mit einem Wassergehalt gleich oder kleiner 50 Gew.-%, vorzugsweise gleich oder kleiner 40 Gew.-%, besonders bevorzugt 10 bis 35 Gew.-%, erhalten wird, jeweils bezogen auf das feuchte Pfropfcopolymer B;
f) gegebenenfalls Waschen des Pfropfcopolymers B während oder in Anschluss an die mechanische Entwässerung von Schritt e);
g) gegebenenfalls Trocknen des in Schritt e) oder f) erhaltenen Pfropfcopolymers B.

Unter der äußersten Pfropfhülle B2 eines Pfropfcopolymers B ist bei einer einstufigen Pfropfung, bei welcher genau eine Pfropfhülle B2 gebildet wird, eine Pfropfhülle B2 zu verstehen, die durch Emulsionspolymerisation von 50 bis 95 Gew.-%, bevorzugt 65 bis 90 Gew.-%, besonders bevorzugt 65 bis 85 Gew.-%, mindestens eines Monomers B21 und 5 bis 50 Gew.-%, bevorzugt 10 bis 35 Gew.-%, besonders bevorzugt 15 bis 35 Gew.- %, mindestens eines Monomers B22, insbesondere von Styrol und Acrylnitril, erhalten wird.

Unter der äußersten Pfropfhülle B2 eines Pfropfcopolymers B ist bei einer zweistufigen Pfropfung, bei welcher ein Pfropfcopolymer B mit zwei verschiedenen Pfropfhüllen B2, bezeichnet als Pfropfhüllen B2' und B2", gebildet wird, die zweite Pfropfhülle B2 (bzw. B2") zu verstehen. Bevorzugt wird die erste Pfropfhülle B2' durch Emulsionspolymerisation des Monomeren B21, insbesondere Styrol, in Gegenwart der Pfropfgrundlage B1 erhalten, und die zweite Pfropfhülle B2" durch anschließende Emulsionspolymerisation der Monomeren B21 und B22 wie oben beschrieben, insbesondere Styrol und Acrylnitril, in Gegenwart der mit B2' gepfropften Pfropfgrundlage B1 (zweistufige Pfropfung) erhalten.

Entsprechendes gilt für mehrstufige Pfropfungen, bei welchen Pfropfcopolymere B mit drei oder mehr verschiedenen Pfropfhüllen B2 gebildet werden.

Unter einem ,Latex' ist eine Polymerdispersion zu verstehen, also ein Gemisch aus Polymerteilchen und einer wässrigen Flüssigkeit.

Unter Radikalfängern sind im Allgemeinen H-Donatoren zu verstehen, die mit Alkylradikalen entweder unter Bildung von abgesättigten Molekülen oder unter Bildung stabiler Radikale reagieren, die zu träge sind, um weiter zu reagieren. Erfindungsgemäß werden die Radikalfänger insbesondere als Oxidations-Inhibitoren (Antioxidantien) verwendet.

### Pfropfcopolymer B

Vorzugsweise ist das Pfropfcopolymer B ausgewählt aus ASA-Pfropfcopolymeren und ABS-Pfropfcopolymeren, besonders bevorzugt sind ASA-Pfropfcopolymere.

ASA-Pfropfcopolymere enthalten typischerweise als Pfropfgrundlage B1 einen vernetzten Polyalkyl(meth)acrylatkautschuk, insbesondere eine vernetzte Polybutylacrylat-Pfropfgrundlage B1.

ABS-Pfropfcopolymere enthalten üblicherweise als Pfropfgrundlage B1 einen oder mehrere Polybutadien-Kautschuke und/oder einen oder mehrere Styrol-Butadien-Kautschuke.

Typischerweise besteht die Pfropfgrundlage B1 aus einem Polymer, vorzugsweise einem zumindest teilweise vernetzten Polymer, mit einer Glasübergangstemperatur unter 0°C, vorzugsweise unter -20°C, besonders bevorzugt unter -40°C, wobei die Glasübergangstemperatur T_{g} durch dynamisch-mechanische Analyse (DMA) unter Verwendung einer Frequenz von 1 Hz gemessen wird.

Die mindestens eine Pfropfhülle B2 besteht typischerweise aus Monomeren, die zu einem Polymer mit einer Glasübergangstemperatur (Tg) von mehr als +20°C, vorzugsweise mehr als +60°C, copolymerisieren.

Bevorzugte Monomere der Pfropfhülle B2 (Monomere B21 und B22) sind Styrol und/oder (alpha)-Methylstyrol und (Meth)acrylnitril, insbesondere Styrol und Acrylnitril, sowie gegebenenfalls Methyl(meth)acrylat, Ethylacrylat, N-Phenylmaleinsäureimid und Maleinsäureanhydrid.

Bevorzugte Monomere B11 zur Herstellung der Pfropfgrundlage B1 sind Butadien, Alkylacrylate und/oder Alkylmethacrylat (auch als Alkyl(meth)acrylate bezeichnet) mit 1 bis 8, bevorzugt 4 bis 8, Kohlenstoffatomen in der Alkylgruppe. Vorzugsweise ist das Monomer B11 mindestens ein Monomer ausgewählt aus C₄-C₈-Alkylacrylaten, bevorzugt ausgewählt aus Butylacrylat, Ethylhexylacrylat und Cyclohexylacrylat.

Häufig werden als Monomer B11 n-Butylacrylat und/oder 2-Ethylhexylacrylat eingesetzt, besonders bevorzugt ist n-Butylacrylat allein oder in Mischung mit anderen Monomeren B11.

Um eine Vernetzung der C₁-C₈-Alkyl(meth)acrylat-Monomere B11 und damit eine Vernetzung der Pfropfgrundlage B1 zu erreichen, werden die Monomere B11 in Gegenwart von 0,1 bis 10 Gew.-%, bevorzugt 0,1 bis 5 Gew.-%, besonders bevorzugt 0,5 bis 4 Gew.-%, ganz besonders bevorzugt 1 bis 3 Gew.-%, insbesondere 1 bis 2,5 Gew.-%, bezogen auf die Pfropfgrundlage B1, eines oder mehrerer polyfunktioneller, vernetzender Monomer(e) B12, polymerisiert.

Geeignete Monomere B12 sind insbesondere polyfunktionelle, vernetzende Monomere, die mit den genannten Monomeren, insbesondere B11 und B13, copolymerisiert werden können. Geeignete polyfunktionelle, vernetzende Monomere B12 enthalten zwei oder mehr, bevorzugt zwei oder drei, besonders bevorzugt genau zwei ethylenische Doppelbindungen, die vorzugsweise nicht 1,3-konjugiert sind.

Beispiele für geeignete polyfunktionelle, vernetzende Monomere B12 sind Allyl(meth)acrylat, Divinylbenzol, Diallylester von Carbonsäuren, wie z.B. Diallymaleat, Diallylfumarat und Diallylphthalat. Auch der Acrylsäureester des Tricyclodecenylalkohols (Tricyclodecenylacrylat, Dihydrodicyclopentadienylacrylat, DCPA) - wie in DE-A 1 260 135 beschrieben - stellt ein bevorzugtes polyfunktionelles, vernetzendes Monomer B12 dar.

Insbesondere ist das polyfunktionelle, vernetzende Monomer B12 (das vorzugsweise zum Vernetzen von Polyalkyl(meth)acrylatkautschuk verwendet wird) mindestens ein Monomer, ausgewählt aus Allyl(meth)acrylat (AMA), Divinylbenzol, Diallymaleat, Diallylfumarat, Diallylphthalat , Triallylcyanurat, Triallylisocyanurat und Dihydrodicyclopentadienylacrylat (DCPA), bevorzugt Allyl(meth)acrylat, Divinylbenzol, Diallylmaleat, Diallylfumarat, Diallylphthalat und DCPA, bevorzugt aus Allyl(meth)acrylat und DCPA.

In einer bevorzugten Ausführungsform werden 1 bis 2,5 Gew.-%, bevorzugt 1,5 bis 2,2 Gew.-%, bezogen auf die Pfropfgrundlage B1, Dihydrodicyclopentadienylacrylat (DCPA) allein oder in Mischung mit mindestens einem weiteren der oben genannten Monomeren B12 eingesetzt, insbesondere in Mischung mit Allyl(meth)acrylat, als Monomer B12.

Weiterhin kann die mindestens eine Pfropfgrundlage B1 optional ein oder mehrere von B11 und B12 verschiedene copolymerisierbare, monoethylenisch ungesättigte Monomere B13 enthalten. Monomere B13 können beispielsweise ausgewählt werden aus Styrol, alpha-Methylstyrol, C₁-C₄-Alkylstyrol, Acrylnitril, Methacrylnitril, Isopren, Chloropren, Methylmethacrylat, Alkylenglykoldi(meth)acrylat und Vinylmethylether. Vorzugsweise ist das weitere Monomer B13 mindestens ein Monomer ausgewählt aus Styrol, (alpha)-Methylstyrol, Acrylnitril, Methacrylnitril, Methyl(meth)acrylat, Isopren, Chloropren und C₁-C₄-Alkylstyrol.

In einer bevorzugten Ausführungsform ist das vinylaromatische Monomer B21 Styrol und/oder (alpha)-Methylstyrol und das Monomer B22 ist Acrylnitril oder ein Gemisch aus Acrylnitril und mindestens einem Monomer ausgewählt aus Methacrylnitril, Acrylamid, Vinylmethylether, Maleinsäureanhydrid, Phthalsäureanhydrid, N-Cyclohexylmaleinimid und N-Phenylmaleinimid. Falls B22 ein Gemisch aus Acrylnitril und mindestens einem Monomer ausgewählt aus Methacrylnitril, Acrylamid, Vinylmethylether, Maleinsäureanhydrid, Phthalsäureanhydrid, N-Cyclohexylmaleinimid und N-Phenylmaleinimid ist, beträgt der Anteil an Acrylnitril, bezogen auf die Gesamtmenge B22, mindestens 50 Gew.- %, bevorzugt mindestens 80 Gew.-%, besonders bevorzugt mindestens 90 Gew.-%.

Besonders bevorzugt wird als Monomer B22 Acrylnitril allein eingesetzt.

Besonders bevorzugt sind die zur Emulsionspolymerisation von Pfropfcopolymer B verwendeten Monomere B21 und B22 Mischungen aus Styrol und Acrylnitril mit einem Gewichtsverhältnis von Styrol zu Acrylnitril im Bereich von 95:5 bis 50:50, bevorzugt im Bereich von 90:10 bis 65:35, besonders bevorzugt im Bereich von 85:15 bis 75:25.

In einer bevorzugten Ausführungsform wird die mindestens eine Pfropfgrundlage B1 erhalten durch Emulsionspolymerisation von:
B11: 80 bis 99,9 Gew.-%, bevorzugt 90 bis 99,5 Gew.-%, besonders bevorzugt 90 bis 99,0 Gew.-% bezogen auf die Pfropfgrundlage B1, mindestens eines C₁-C₈-Alkyl(meth)acrylats, bevorzugt n-Butylacrylat und/oder 2-Ethylhexylacrylat, als Monomer B11;
B12: 0,1 bis 10 Gew.-%, bevorzugt 0,5 bis 4 Gew.-%, besonders bevorzugt 1 bis 2,5 Gew.-%, bezogen auf die Pfropfgrundlage B1, mindestens eines polyfunktionellen Vernetzungsmonomers B12; vorzugsweise ausgewählt aus Allyl(meth)acrylat, Divinylbenzol, Diallylmaleat, Diallylfumarat, Diallylphthalat, Triallylcyanurat, Triallylisocyanurat und Dihydrodicyclopentadienylacrylat (DCPA);
B13: 0 bis 19,9 Gew.-%, vorzugsweise 0 bis 9,5 Gew.-%, besonders bevorzugt 0 bis 9,0 Gew.-%, bezogen auf die Pfropfgrundlage B1, mindestens eines weiteren Monomeren, vorzugsweise ausgewählt aus Styrol, alpha-Methylstyrol, CrC4-Alkylstyrol, Acrylnitril, Methacrylnitril, Isopren, Chloropren, Methylmethacrylat, Alkylenglykol-di(meth)acrylat und Vinylmethylether;
wobei die Summe von B11, B12 und B13 gleich 100 Gew.-% ist.

In einer weiteren bevorzugten Ausführungsform wird die mindestens eine Pfropfgrundlage B1 erhalten durch Emulsionspolymerisation von:
B11: 90 bis 99,9 Gew.-%, bevorzugt 97 bis 99,5 Gew.-%, besonders bevorzugt 97,5 bis 99 Gew.-%, bezogen auf die Pfropfgrundlage B1, mindestens eines C₁-C₈-Alkyl(meth)acrylats, bevorzugt mindestens eines C₄-C₈-Alkyl(meth)acrylat, besonders bevorzugt n-Butylacrylat und/oder 2-Ethylhexylacrylat, ganz besonders bevorzugt n-Butylacrylat, als Monomer B11; und
B12: 0,1 bis 10 Gew.-%, bevorzugt 0,5 bis 3 Gew.-%, besonders bevorzugt 1 bis 2,5 Gew.-%, bezogen auf die Pfropfgrundlage B1, mindestens eines mehrfunktionellen, vernetzenden Monomers B12; ausgewählt aus Allyl(meth)acrylat, Divinylbenzol, Diallylmaleat, Diallylfumarat, Diallylphthalat und Dihydrodicyclopentadienylacrylat (DCPA), insbesondere aus Allyl(meth)acrylat und/oder Dihydrodicyclopentadienylacrylat (DCPA);
wobei die Summe von B11 und B12 100 Gew.-% (bezogen auf alle Monomere der Pfropfgrundlage B1) beträgt.

Insbesondere weitere geeignete Zusammensetzungen der Pfropfgrundlage B1, enthaltend die Monomeren B11, B12 und gegebenenfalls B13, sowie das allgemeine Verfahren zu ihrer Herstellung sind beispielsweise in DE-A 28 26 925, DE-A 31 49 358 und DE-A 34 14 118 beschrieben.

In einer bevorzugten Ausführungsform wird die mindestens eine Pfropfhülle B2 durch Emulsionspolymerisation in Gegenwart der mindestens einen Pfropfgrundlage B1 erhalten aus:
B21: 50 bis 95 Gew.-%, bevorzugt 65 bis 90 Gew.-%, besonders bevorzugt 70 bis 85 Gew.-%, bezogen auf die Pfropfhülle B2, mindestens ein vinylaromatisches Monomer B21, wobei das Monomer B21 ausgewählt ist aus Styrol, (alpha)-Methylstyrol oder Mischungen aus Styrol und einem weiteren Monomer ausgewählt aus (alpha) -Methylstyrol, (para)-Methylstyrol, C₁-C₄-Alkyl(meth)acrylat (z.B. Methyl(meth)acrylat, Ethyl(meth)acrylat), vorzugsweise ausgewählt aus Styrol, (alpha)-Methylstyrol oder Mischungen aus Styrol und (alpha)-Methylstyrol oder Methyl(meth)acrylat, und
B22: 5 bis 50 Gew.-%, bevorzugt 10 bis 35 Gew.-%, besonders bevorzugt 15 bis 30 Gew.-%, bezogen auf die Pfropfhülle B2 , mindestens ein ethylenisch ungesättigtes Monomer B22, wobei das Monomer B22 ausgewählt ist aus Acrylnitril oder Mischungen aus Acrylnitril und mindestens einem weiteren Monomer ausgewählt aus Methacrylnitril, Acrylamid, Vinylmethylether, Anhydriden ungesättigter Carbonsäuren (z.B. Maleinsäureanhydrid, Phthalsäureanhydrid) und Imiden ungesättigter Carbonsäuren (z.B. N-substituiertes Maleimid, wie N-Cyclohexylmaleimid und N-Phenylmaleimid), vorzugsweise ausgewählt aus Acrylnitril oder Gemischen von Acrylnitril und Methacrylnitril.

Insbesondere enthält das Pfropfcopolymer B eine Pfropfgrundlage B1, vorzugsweise einen vernetzten Polyalkyl(meth)acrylatkautschuk wie oben beschrieben, und eine oder mehrere Pfropfhülle(n) B2, insbesondere eine, zwei oder drei Pfropfhüllen B2, die sich in Auswahl und Menge der Monomeren B21 und B22 unterscheiden und durch stufenweise Pfropf-Emulsionspolymerisation der Monomeren B21 und/oder B22 in Gegenwart von Pfropfgrundlage B1 bzw. in Gegenwart von bereits gepfropfter Pfropfgrundlage basierend auf B1 erhalten werden.

In einer bevorzugten Ausführungsform enthält das Pfropfcopolymer B mindestens eine Pfropfgrundlage B1, bevorzugt einen vernetzten Polybutylacrylatkautschuk wie oben beschrieben, und genau eine Pfropfhülle B2, erhalten durch Emulsionspolymerisation der Monomeren B21 und B22 wie oben beschrieben, insbesondere Styrol und Acrylnitril, in Gegenwart der Pfropfgrundlage B1 (einstufige Pfropfung).

In einer weiteren bevorzugten Ausführungsform enthält das Pfropfcopolymer B mindestens eine Pfropfgrundlage B1, vorzugsweise einen vernetzten Polybutylacrylatkautschuk wie oben beschrieben, und zwei verschiedene Pfropfhüllen B2, bezeichnet als Pfropfhüllen B2' und B2", wobei B2' durch Emulsionspolymerisation des Monomeren B21 (bezeichnet als B21'), insbesondere Styrol, in Gegenwart der Pfropfgrundlage B1 erhalten wird, und die Pfropfhülle B2" durch anschließende Emulsionspolymerisation der Monomeren B21 und B22 (bezeichnet als B21" und B22") wie oben beschrieben, insbesondere Styrol und Acrylnitril, in Gegenwart der mit B2' gepfropften Pfropfgrundlage B1 (zweistufige Pfropfung) erhalten wird.

In einer bevorzugten Ausführungsform (einstufige Pfropfung) enthält das Pfropfcopolymer B:
B1: 50 bis 70 Gew.-%, bevorzugt 55 bis 65 Gew.-%, besonders bevorzugt 58 bis 65 Gew.-%, bezogen auf das Pfropfcopolymer B, mindestens einer, bevorzugt genau einer, Pfropfgrundlage B1 wie oben beschrieben, wobei die mindestens eine Pfropfgrundlage B1 bevorzugt eine Teilchengröße (insbesondere mittlerer Teilchendurchmesser Dᵥ) im Bereich von 50 bis 140 nm, bevorzugt 60 bis 130 nm, besonders bevorzugt 70 bis 120 nm, aufweist;
B2: 30 bis 50 Gew.-%, bevorzugt 35 bis 45 Gew.-%, besonders bevorzugt 35 bis 42 Gew.-%, bezogen auf das Pfropfcopolymer B, einer Pfropfhülle B2, erhalten durch Emulsionspolymerisation in Gegenwart mindestens einer Pfropfgrundlage B1 von:
   B21: 50 bis 95 Gew.-%, bevorzugt 65 bis 90 Gew.-%, besonders bevorzugt 70 bis 85 Gew.-%, bezogen auf die Pfropfhülle B2, mindestens eines vinylaromatischen Monomers B21, wobei das Monomer B21 ausgewählt ist aus Styrol, (alpha)-Methylstyrol oder Mischungen aus Styrol und mindestens einem weiteren Monomer ausgewählt aus (alpha)-Methylstyrol, p-Methylstyrol und C₁-C₄-Alkyl(meth)acrylat (z.B. Methyl(meth)acrylat, Ethyl(methacrylat), vorzugsweise ausgewählt aus Styrol, (alpha)-Methylstyrol oder Mischungen von Styrol mit (alpha)-Methylstyrol oder Methyl(meth)acrylat; und
   B22: 5 bis 50 Gew.-%, bevorzugt 10 bis 35 Gew.-%, besonders bevorzugt 15 bis 30 Gew.-%, bezogen auf die Pfropfhülle B2, mindestens eines ethylenisch ungesättigten Monomers B22, wobei das Monomer B22 ausgewählt ist aus Acrylnitril oder Mischungen aus Acrylnitril und mindestens einem weiteren Monomer ausgewählt aus Methacrylnitril, Acrylamid, Vinylmethylether, Anhydriden ungesättigter Carbonsäuren (zB Maleinsäureanhydrid, Phthalsäureanhydrid) und Imiden ungesättigter Carbonsäuren (z.B. N-substituiertes Maleimid wie N-Cyclohexylmaleimid und N-Phenylmaleimid), vorzugsweise ausgewählt aus Acrylnitril oder Gemischen von Acrylnitril und Methacrylnitril;
wobei die Gesamtsumme aus Pfropfgrundlage B1 und Pfropfhülle B2 100 Gew.-% beträgt und wobei der in Schritt a) erhaltene Latex des Pfropfcopolymers B eine Teilchengröße (insbesondere mittlerer Teilchendurchmesser Dv) im Bereich von 50 bis 150 nm, bevorzugt 60 bis 140 nm, besonders bevorzugt 70 bis 130 nm, aufweist.

Gemäß einer weiteren Ausführungsform kann bei der zuvor beschriebenen einstufigen Pfropfung die Pfropfgrundlage B1, welche bevorzugt eine Teilchengröße (insbesondere mittlerer Teilchendurchmesser Dv) im Bereich von 50 bis 140 nm, bevorzugt 60 bis 130 nm, besonders bevorzugt 70 bis 120 nm, aufweist, durch bekannte Agglomerationsverfahren (s. z.B. WO 2012/022710, und WO 2014/170406 bzw. WO 2014/170406) agglomeriert werden. Die agglomerierte Pfropfgrundlage B1 wird dann wie zuvor beschrieben mit einer Pfropfhülle B2 gepfropft, wobei der in Schritt a) erhaltene Latex Pfropfcopolymere B mit Teilchengrößen (insbesondere mittlerer Teilchendurchmesser Dᵥ) im Bereich von 200 bis 600 nm, bevorzugt 250 bis 500 nm, besonders bevorzugt 300 bis 400 nm, enthält. Der mittels einer agglomerierten Pfropfgrundlage B1 erhaltene Latex ist oftmals bimodal und weist oftmals bimodale Teilchengrößenverteilungen mit Teilchengrößen (insbesondere mittlerer Teilchendurchmesser Dv) im Bereich von 60 bis 200 nm, oftmals 60 bis 150 nm, und 300 bis 600 nm auf.

Typischerweise kann die Teilchengröße von Latices des Pfropfcopolymers B als der volumen-mittlere durchschnittliche Teilchendurchmesser Dv-Wert angegeben werden. Der volumenmittlere Teilchendurchmesser Dv (oder der mittlere Teilchendurchmesser nach De Broucker), auch als mittlerer Teilchendurchmesser Dv bezeichnet, ist eine durchschnittliche Größe, bezogen auf das Einheitsvolumen der Teilchen. Beispielsweise kann der volumenmittlere Teilchendurchmesser Dv mittels Lichtstreuung (Laserbeugung) bestimmt werden (z.B. mit einem Gerät von Beckman Coulter).

Weiterhin kann die Partikelgröße als mittlere Partikelgröße D₅₀ angegeben werden. Der mittlere Partikeldurchmesser D₅₀ stellt den Wert der Partikelgrößenverteilungskurve dar, bei dem 50 Vol.-% der Partikel (z. B. Polyacrylat-Latexpartikel) einen Durchmesser kleiner als der D₅₀-Wert und die anderen 50 Vol.-% einen Durchmesser größer als der D₅₀-Wert haben. In ähnlicher Weise gibt beispielsweise der D₉₀-Wert den Partikeldurchmesser an, bei welchem 90 Vol.-% aller Partikel einen kleineren Durchmesser haben.

Gemäß der vorliegenden Erfindung hat die im Zusammenhang mit dem Pfropfcopolymer B genannte Teilchengröße vorzugsweise die Bedeutung des volumenmittleren Teilchendurchmessers Dv, der mittels Lichtstreuung bestimmt wurde.

In einer weiteren bevorzugten Ausführungsform (zweistufige Pfropfung B2' und B2") enthält das Pfropfcopolymer B:
B1: 50 bis 70 Gew.-%, bevorzugt 55 bis 65 Gew.-%, bezogen auf das Pfropfcopolymer B, mindestens einer, bevorzugt genau einer Pfropfgrundlage B1 wie oben beschrieben, wobei bevorzugt die mindestens eine Pfropfgrundlage B1 eine Teilchengröße (insbesondere mittlerer Teilchendurchmesser Dv) im Bereich von 200 bis 700 nm, bevorzugt 200 bis 500 nm, besonders bevorzugt 250 bis 450 nm aufweist;
B2': 10 bis 30 Gew.-%, bevorzugt 10 bis 20 Gew.-%, bezogen auf das Pfropfcopolymer B, mindestens einer Pfropfhülle B2', die durch Emulsionspolymerisation erhalten wird, in Anwesenheit von Pfropfgrundlage B1, von:
   B21' 100 Gew.-%, bezogen auf Pfropfhülle B2', mindestens ein vinylaromatisches Monomer B21' ausgewählt aus Styrol, (alpha)-Methylstyrol oder einer Mischung aus Styrol und mindestens einem weiteren Monomer ausgewählt aus (alpha)-Methylstyrol, p-Methylstyrol und C₁-C₄-Alkyl(meth)acrylat (z.B. Methyl(meth)acrylat, Ethyl(meth)acrylat); und
B2": 20 bis 40 Gew.-%, bevorzugt 20 bis 30 Gew.-%, bezogen auf das Pfropfcopolymer B, mindestens einer Pfropfhülle B2", die durch Emulsionspolymerisation erhalten wird, in Anwesenheit von Pfropfgrundlage B1, gepfropft mit B2', von:
   B21": 50 bis 95 Gew.-%, bevorzugt 65 bis 90 Gew.-%, besonders bevorzugt 70 bis 85 Gew.-%, bezogen auf die Pfropfhülle B2", mindestens ein vinylaromatisches Monomer B21", ausgewählt aus Styrol, (alpha )-Methylstyrol oder Mischungen aus Styrol und mindestens einem weiteren Monomer ausgewählt aus alpha-Methylstyrol, p-Methylstyrol und C₁-C₄-Alkyl(meth)acrylat (z.B. Methyl(meth)acrylat, Ethyl(meth)acrylat), vorzugsweise ausgewählt aus Styrol, (alpha)-Methylstyrol oder Mischungen aus Styrol und (alpha)-Methylstyrol oder Methyl(meth)acrylat; und
   B22": 5 bis 50 Gew.-%, bevorzugt 10 bis 35 Gew.-%, besonders bevorzugt 15 bis 30 Gew.-%, bezogen auf die Pfropfhülle B2", mindestens ein Monomer B22" ausgewählt aus Acrylnitril oder Mischungen aus Acrylnitril und mindestens einem weiteren Monomer ausgewählt aus Methacrylnitril, Acrylamid, Vinylmethylether, Anhydriden ungesättigter Carbonsäuren (z.B. Maleinsäureanhydrid, Phthalsäureanhydrid) und Imiden ungesättigter Carbonsäuren (z.B. N-substituiertes Maleimid, wie N-Cyclohexylmaleimid und N-Phenylmaleimid), vorzugsweise ausgewählt aus Acrylnitril oder Mischungen von Acrylnitril und Methacrylnitril;
wobei die Gesamtsumme aus Pfropfgrundlage B1, Pfropfhülle B2' und Pfropfhülle B2" 100 Gew.-% beträgt, und wobei der in Schritt a) erhaltene Latex des Pfropfcopolymers B eine Teilchengröße (insbesondere mittlerer Teilchendurchmesser Dv) im Bereich von 250 bis 700 nm, bevorzugt 300 bis 600 nm, aufweist.

Gemäß einer bevorzugten Ausführungsform ist das Pfropfcopolymer B eine Mischung aus den oben beschriebenen Ausführungsformen von Einstufen-Pfropfcopolymer B und Zweistufen-Pfropfcopolymer B (einschließlich Pfropf B2' und B2").

Besonders bevorzugt sind die Monomere B21, B21' und B21" Styrol oder Mischungen aus Styrol und alpha-Methylstyrol.

Besonders bevorzugt sind die Monomere B22 und B22" Acrylnitril oder Mischungen aus Acrylnitril und mindestens einem weiteren Monomer ausgewählt aus Methacrylnitril, Maleinsäureanhydrid, N-Cyclohexylmaleinimid, N-Phenylmaleinimid, besonders bevorzugt Acrylnitril oder Mischungen aus Acrylnitril und mindestens einem weiteren Monomer ausgewählt aus Methacrylnitril und Maleinsäureanhydrid. In den vorgenannten Mischungen von Acrylnitril beträgt der Anteil an Acrylnitril, bezogen auf Gesamtmenge der Monomere B22 bzw. B22", mindestens 50 Gew.-%, bevorzugt mindestens 80 Gew.-%, besonders bevorzugt 90 Gew.-%.

In einer besonders bevorzugten Ausführungsform der Erfindung sind die Monomere B21, B21' und B21" Styrol und die Monomere B22 und B22" Acrylnitril.

In einer anderen Ausführungsform kann das Pfropfcopolymer B ein ABS-Pfropfcopolymer sein, enthaltend:
B1: 40 bis 80 Gew.-%, bevorzugt 45 bis 70 Gew.-%, besonders bevorzugt 45 bis 65 Gew.-%, bezogen auf das Pfropfcopolymer B, mindestens einer Pfropfgrundlage B1, erhalten durch Emulsionspolymerisation von Butadien als Monomer B1; und
B2: 20 bis 60 Gew.-%, bevorzugt 30 bis 55 Gew.-%, besonders bevorzugt 35 bis 55 Gew.-%, bezogen auf das Pfropfcopolymer B, mindestens eine Pfropfhülle B2 wie oben beschrieben, bevorzugt erhalten durch Emulsionspolymerisation von 65 bis 85 Gew.-%, bezogen auf die Pfropfhülle B2, Styrol als Monomer B21 und 15 bis 35 Gew.-%, bezogen auf die Pfropfhülle B2, Acrylnitril als Monomer B22, in Gegenwart der mindestens einen Pfropfgrundlage B1;
wobei die Gesamtsumme aus Pfropfgrundlage B1 und Pfropfhülle B2 gleich 100 Gew.- % ist; und wobei der Latex des ABS-Pfropfcopolymers B eine Teilchengröße (insbesondere mittlerer Teilchendurchmesser Dv) im Bereich von 100 bis 500 nm aufweist.

In einer bevorzugten Ausführungsform der Erfindung umfasst das erfindungsgemäße Verfahren die Synthese von mindestens zwei, vorzugsweise zwei, drei oder vier unterschiedlichen Pfropfcopolymeren B, wobei sich die Pfropfcopolymere B (z.B. Pfropfcopolymere B-I und B-II) in ihrer Teilchengröße unterscheiden.

Pfropfcopolymer B umfasst in dieser bevorzugten Ausführungsform insbesondere mindestens zwei Pfropfcopolymere B-I und B-II, vorzugsweise auf Basis von vernetzten C₁-C₈-Alkyl(meth)acrylat-Pfropfgrundlagen B1 wie oben beschrieben, wobei:
Pfropfcopolymer B-I (feinteiliger ASA-Kautschuk) eine Teilchengröße (insbesondere mittlerer Teilchendurchmesser Dv) im Bereich von 60 bis 200 nm, bevorzugt von 80 bis 150 nm, besonders bevorzugt von 90 bis 100 nm, aufweist und
Pfropfcopolymer B-II (grobteiliger ASA Kautschuk) eine Partikelgröße (mittlerer Partikeldurchmesser Dv) im Bereich von 300 bis 800 nm, vorzugsweise von 300 bis 700 nm, besonders bevorzugt von 400 bis 600 nm, aufweist.

Das Pfropfcopolymer B-I (feinteiliger ASA-Kautschuk) wird vorzugsweise durch Emulsionspolymerisation der Monomeren B21 und B22 wie oben beschrieben, insbesondere von Styrol oder α-Methylstyrol als B21 und Acrylnitril als B22, erhalten, in Gegenwart der zuvor hergestellten wie oben beschriebenen Pfropfgrundlage B1, als Beispiel für ein einstufiges Pfropfcopolymer B.

Vorzugsweise soll das Pfropfcopolymer B-II (grobteiliger ASA-Kautschuk) eine enge Teilchengrößenverteilung aufweisen, wobei die Teilchengrößenverteilung Q = (D₉₀-D₁₀)/D₅₀ weniger als 0,3, vorzugsweise weniger als 0,2 beträgt.

Gemäß einer weiteren bevorzugten Ausführungsform ist das Pfropfcopolymer B ein durch Emulsionspolymerisation hergestelltes Pfropfcopolymer mit einer Kern-Schale-Struktur, umfassend einen inneren Kern BK1 und drei Schichten BK2, BH1 und BH2, in der Reihenfolge BK1, BK2, BH1, BH2 von innen nach außen (beispielsweise wie beschrieben in WO 2020/020834 A1).

In dem zuvor beschriebenen Pfropfcopolymer B mit einer Kern-Schale-Struktur umfasst die oben beschriebene Pfropfgrundlage B1 einen inneren Kern BK1 und eine äußere Kernschale BK2, und die Pfropfhülle B2 bzw. B2' und B2"umfasst die Schichten BH1 und BH2.

Gemäß einer weiteren bevorzugten Ausführungsform ist das Pfropfcopolymer B ein durch Emulsionspolymerisation hergestelltes Pfropfcopolymer mit einer Kern-Schale-Struktur, umfassend einen inneren Kern BS und vier Schichten BK1, BK2, BH1 und BH2, in der Reihenfolge BS, BK1, BK2, BH1, BH2 von innen nach außen.

In dem zuvor beschriebenen Pfropfcopolymer B mit einer Kern-Schale-Struktur umfasst die oben beschriebene Pfropfgrundlage B1 einen inneren Kern BS, eine erste Kernschale BK1 und eine zweite (äußere) Kernschale BK2, und die Pfropfhülle B2 bzw. B2' und B2" umfasst die Schichten BH1 und BH2.

Oftmals sind solche Pfropfcopolymere B mit einer Kern-Schale-Struktur zusammengesetzt aus:
BS: 0 bis 5 Gew.-% eines inneren Kerns BS bestehend aus mindestens einem Copolymer aus:
   BK21: 95,0 bis 99,0 Gew.-% mindestens eines C₂-C₈-Alkylacrylats;
   BK22: 1,0 bis 5,0 Gew.-% eines oder mehrerer bi- oder polyfunktioneller, vernetzender Monomere;
BK1: 6 bis 19 Gew.-% eines inneren Kerns BK1, oder - falls BS vorhanden - einer Kernschale BK1, bestehend aus mindestens einem Copolymer aus:
   BK11: 95,0 bis 99,9 Gew.-% mindestens eines vinylaromatischen Monomers und
   BK12: 0,1 bis 5,0 Gew.-% mindestens eines bi- oder polyfunktionellen, vernetzenden Monomers;
BK2: 41 bis 54 Gew.-% einer Kernschale BK2 bestehend aus mindestens einem Copolymer aus:
   BK21: 95,0 bis 99,0 Gew.-% mindestens eines C₂-C₈-Alkylacrylats;
   BK22: 1,0 bis 5,0 Gew.-% eines oder mehrerer bi- oder polyfunktioneller, vernetzender Monomere;
BH1: 1 bis 19 Gew.-% einer ersten Pfropfhüllenschicht BH1, bestehend aus mindestens einem vinylaromatischen Polymer; und
BH2: 21 bis 39 Gew.-% einer zweiten Pfropfhüllenschicht BH2 bestehend aus mindestens einem Copolymer enthaltend mindestens ein vinylaromatisches Monomer BH21 und mindestens ein Nitrilmonomer BH22;
wobei die Summe von BK1, BK2, BH1 und BH2 100 Gew.-% ergibt; und wobei der mittlere Teilchendurchmesser Dᵥ des Pfropfcopolymers B im Bereich von 280 bis 450 nm, vorzugsweise 310 bis 370 nm, stärker bevorzugt 320 bis 360 nm, liegt.

Geeignete vernetzte C₁-C₈-Alkyl(meth)acrylat-Polymer-Pfropfgrundlagen B1 des Pfropfcopolymers B-II (bezeichnet als B1-II) können nach bekannten Verfahren zur Herstellung von grobteiligen Dispersionen hergestellt werden, zweckmäßigerweise durch Saatpolymerisation, wie in DE 1 911 882 zur Herstellung von ASA-Polymeren beschrieben. Gemäß diesem Verfahren wird ein feinteiliger, vernetzter Acrylatlatex oder ein feinteiliger, vernetzter Polystyrollatex mit einer Teilchengröße (insbesondere mittlerer Teilchendurchmesser Dᵥ) von 50 bis 180 nm, vorzugsweise 50 bis 120 nm, als Saatlatex eingesetzt. Der Saatlatex der durch Emulsionspolymerisation von C₁-C₈-Alkyl(meth)acrylaten, und vernetzenden Monomeren oder durch Emulsionspolymerisation von Styrol und vernetzenden Monomeren (siehe z.B. BK1 wie oben beschrieben) erhalten wird, wird einer weiteren Polymerisationsreaktion unterzogen. Insbesondere werden die Reaktionsbedingungen so eingestellt, dass nur ein weiteres Wachstum der vorliegenden Keimlatexpartikel ermöglicht wird, ohne neue Latexpartikel zu bilden (beschrieben in Journal of Applied Polymer Science, Bd. 9 (1965), Seiten 2929 bis 2938). Normalerweise wird bei diesem Verfahren ein Initiator verwendet.

Durch Variation des Verhältnisses von Saatlatex zu Monomeren kann die Teilchengröße des resultierenden Pfropfcopolymers B-II (grobteiliger Kautschuk) eingestellt werden. Pfropfcopolymer B-II wird vorzugsweise durch Emulsionspolymerisation der Monomeren B21 und B22 wie oben beschrieben, insbesondere Styrol oder α-Methylstyrol als B21 und Acrylnitril als B22, in Gegenwart der zuvor hergestellten Pfropfgrundlage B1-II erhalten.

Vorzugsweise werden die oben beschriebenen Pfropfcopolymere B-I und B-II in den Schritten a) bis c), gegebenenfalls d), und e), sowie gegebenenfalls f) und g) getrennt hergestellt, ausgefällt, gesintert, gegebenenfalls abgekühlt, entwässert und gegebenenfalls gewaschen und getrocknet. Es ist auch möglich, die Pfropfcopolymerlatices B-I und B-II nach ihrer getrennten Herstellung in Schritt a) zu mischen und gemeinsam in Schritt b) auszufällen. Nachfolgende Schritte wie das Sintern in Schritt c), das Abkühlen in Schritt d), das Entwässern in Schritt e), das Waschen in Schritt f) und das Trocknen in Schritt g) können wie beschrieben durchgeführt werden.

Das Gewichtsverhältnis der Pfropfcopolymerisate B-I und B-II kann in weiten Bereichen variiert werden. Vorzugsweise ist das Pfropfcopolymer B eine Mischung aus Pfropfcopolymer B-I und B-II, wobei das Gewichtsverhältnis von B-I: B-II von 90 : 10 bis 10 : 90, vorzugsweise 80 : 20 bis 20 : 80, beträgt.

Über bekannte Agglomerationsverfahren können auch Pfropfcopolymere B mit unterschiedlichen Teilchengrößen, insbesondere bimodalen Teilchengrößenverteilungen von 60 bis 200 nm und 300 bis 600 nm erhalten werden.

Ferner sind Pfropfcopolymere mit großen und kleinen Teilchen beispielsweise in der DE-A 3615607 beschrieben.

Weiterhin können Pfropfcopolymere B mit zwei oder mehr unterschiedlichen Pfropfhüllen B2 wie oben beschrieben eingesetzt werden. Weitere Pfropfcopolymere mit mehrschichtigen Pfropfhüllen sind z.B. in EP-A 0111260 und WO 2015/078751 beschrieben.

### Schritt a) - Herstellung des Pfropfcopolymers B durch Emulsionspolymerisation

Schritt a) des erfindungsgemäßen Verfahrens umfasst die Herstellung eines Latex des mindestens einen Pfropfcopolymers B durch:
a1) Zugabe und Emulsionspolymerisation der Monomere B21 und B22 in Gegenwart der mindestens einen Pfropfgrundlage B1 zur Bildung der mindestens einen Pfropfhülle B2; und
a2) nach Beendigung der letzten Monomerzugabe in Schritt a1), Zugabe von mindestens einem Radikalfänger, insbesondere mindestens einem wasserlöslichen Radikalfänger.

Die letzte Monomer-Zugabe in Schritt a1) ist die Zugabe von mindestens einem Monomer B21 und mindestens einem Monomer B22 wie zuvor beschrieben, insbesondere von Styrol und Acrylnitril, wobei der Anteil des Monomers B21 50 bis 95 Gew.-%, bevorzugt 65 bis 90 Gew.-%, besonders bevorzugt 70 bis 85 Gew.-%, und der Anteil des Monomers B22 5 bis 50 Gew.-%, bevorzugt 10 bis 35 Gew.-%, besonders bevorzugt 15 bis 30 Gew.-%, beträgt. Die Monomeren B21 und B22 können dabei einzeln oder als Mischung zugegeben werden.

Geeignete Radikalfänger, die in Schritt a2) des erfindungsgemäßen Verfahrens eingesetzt werden können, sind beispielsweise Alkylphenole (z.B. TBC (4-*tert*-Butylbrenzcatechin)), insbesondere sterisch gehinderte Alkylphenole, Alkoxyphenole (z.B. MeHQ (4-Methoxyphenol)), sterisch gehinderte Thiophenole (z.B. Lowinox^{®} TBM-6), aromatische Amine, sterisch gehinderte Amine und/oder Dialkylhydroxylamine, bevorzugt N,N-Di-C₁-C₆-alkylhydroxylamine, besonders bevorzugt N,N-Di-ethylhydroxylamin (DEHA), sowie stabilisierte Radikale wie z.B. 4-Hydroxy-2,2,6,6-tetramethylpiperidinyloxyl (4-Hydroxy-TEMPO).

Unter den vorstehend genannten Radikalfängern sind insbesondere solche bevorzugt, die "wasserlöslich" sind. Unter "wasserlöslich" ist zu verstehen, dass der mindestens eine Radikalfänger im Allgemeinen eine Löslichkeit (bei 20°C) von mindestens 0,5 g/l Wasser, bevorzugt von mindestens 3 g/l Wasser, besitzt.

Unter den vorgenannten Radikalfängern weisen beispielsweise die folgenden Substanzen folgende Wasserlöslichkeiten (bei 20°C) auf: TBC 4,2 g/l, MeHQ 25-30 g/l, Lowinox^{®} TBM-6 0,8 g/l, 4-Hydroxy-TEMPO: 629 g/l. DEHA ist in Wasser sehr gut löslich und kommerziell als 85%-ige wässrige Lösung erhältlich.

Der mindestens eine, vorzugsweise-wasserlösliche, Radikalfänger ist bevorzugt mindestens ein N,N-Di-C₁-C₆-alkylhydroxylamin ausgewählt aus N,N-Dimethylhydroxylamin, N-Methyl-N-ethylhydroxylamin, N,N-Diethylhydroxylamin, N,N-Di-n-propylhydroxylamin, N,N-Di-n-butylhydroxylamin, N,N-Di-isobutylhydroxylamin, N,N-Di-n-pentylhydroxylamin und N,N-Di-n-hexylhydroxylamin, ganz besonders bevorzugt ist N,N-Di-ethylhydroxylamin (DEHA). Weiterhin bevorzugt als der mindestens eine, vorzugsweise-wasserlösliche, Radikalfänger sind 4-tert-Butylbrenzcatechin (TBC), sterisch gehinderte Thiophenole wie z.B. Lowinox^{®} TBM-6, Alkoxyphenole wie z.B. 4-Methoxyphenol (MEHQ) und 4-Hydroxy-2,2,6,6-tetramethylpiperidinyloxyl (4-Hydroxy-TEMPO).

Besonders bevorzugt als Radikalfänger ist N,N-Di-ethylhydroxylamin (DEHA).

Der Radikalfänger wird üblicherweise in einer Menge von 0,01 bis 0,80 Gew.-%, bevorzugt 0,02 bis 0,60 Gew.-%, besonders bevorzugt 0,04 bis 0,60 Gew.-%, bezogen auf die Gesamtmenge der Dispersion des Pfropfcopolymers B (aus Schritt a1), eingesetzt.

Schritt a2) des erfindungsgemäßen Verfahrens wird im Allgemeinen bei einer Temperatur von 40 bis 85°C, bevorzugt 50 bis 75°C, besonders bevorzugt 55 bis 70°C, durchgeführt.

Die Zugabe des Radikalfängers in Schritt a2) kann bis zu 10 Stunden, bevorzugt bis zu 6 Stunden, insbesondere bis zu 3 Stunden, nach Ende der letzten Monomerzugabe in Schritt a1) erfolgen. Oftmals erfolgt die Zugabe des Radikalfängers in Schritt a2) des erfindungsgemäßen Verfahrens kurz nach Beendigung der letzten Monomerzugabe in Schritt a1), d.h. z.B. 0 bis 90 Minuten, oftmals 0 bis 60 Minuten, ferner oftmals 0 bis 30 Minuten, sowie oftmals 0 bis 20 Minuten, nach Beendigung der letzten Monomerzugabe in Schritt a1).

In Schritt a2) des erfindungsgemäßen Verfahrens kann - unmittelbar nach Beendigung der letzten Monomerzugabe in Schritt a1) - eine Nachpolymerisation des in Schritt a1) erhaltenen Gemischs bevorzugt über einen Zeitraum von 20 bis 90 Minuten, besonders bevorzugt 30 bis 70 Minuten, ganz besonders bevorzugt 40 bis 70 Minuten, bei einer Temperatur von 40 bis 80°C, bevorzugt 55 bis 75°C, besonders bevorzugt 60 bis 70°C erfolgen. Durch Zugabe des Radikalfängers wird die Nachpolymerisation des Gemischs gestoppt. Oftmals und bevorzugt wird der erhaltene Latex des Pfropfcopolymers B aber auch noch nach Zugabe des Radikalfängers bei der vorgenannten Temperatur innerhalb des vorgenannten Zeitraums für die Nachpolymerisation belassen.

Es wurde gefunden, dass der erhaltene Gelbwert (Yellowness-Index YI gemäß ASTM E 313-10) umso geringer ausfällt, je früher der Radikalfänger in Schritt a2) nach Ende der letzten Monomerzugabe in Schritt a1) zugegeben wird.

Bevorzugt erfolgt die Zugabe des Radikalfängers in Schritt a2) des erfindungsgemäßen Verfahrens, wenn die Menge an Restmonomer B22, insbesondere Acrylnitril, in der wässrigen Phase > 25 ppm, bevorzugt > 50 ppm, besonders bevorzugt > 100 ppm, ganz besonders bevorzugt > 175 ppm, beträgt. Unter "Restmonomer" sind nicht umgesetzte Monomere zu verstehen. Der Ausdruck "ppm" (parts per million) bedeutet im Sinne der vorliegenden Erfindung mg Acrylnitril/kg Wasser.

Die Menge an Restmonomer B22, insbesondere Acrylnitril, wird durch Gaschromatographie-Flammenionisationsdetektion (GC-FID) unter Verwendung einer externen Kalibrierung mit Mesitylen und Proprionitril als interner Standardlösung in DMSO - nach Fällung und Filtration im Filtrat (= Restmonomer-Probe) - ermittelt. Dabei wird der ausgefallene Feststoff (Pfropfcopolymer B) abgetrennt und das gesamte Filtrat als Restmonomer-(REMO)-Probe aufgefangen und mittels GC-FID wird das Restmonomer B22 quantifiziert.

In einer bevorzugten Ausführungsform (einstufige Pfropfung) umfasst Schritt a) des erfindungsgemäßen Verfahrens die Herstellung eines Latex mindestens eines Pfropfcopolymers B enthaltend mindestens eine Pfropfgrundlage B1 und genau eine Pfropfhülle B2 durch:
a1) Zugabe und Emulsionspolymerisation der Monomere B21 und B22 wie oben beschrieben, insbesondere Styrol und Acrylnitril, in Gegenwart der mindestens einen, vorzugsweise einen, Pfropfgrundlage B1, bevorzugt ein vernetzter Polybutylacrylatkautschuk wie oben beschrieben, zur Bildung genau einer Pfropfhülle B2; und
a2) nach Beendigung der letzten Monomerzugabe in Schritt a1), Zugabe von mindestens einem Radikalfänger;

In einer weiteren bevorzugten Ausführungsform (zweistufige Pfropfung) umfasst Schritt a) des erfindungsgemäßen Verfahrens die Herstellung mindestens eines Pfropfcopolymers B - in Form eines Latex - enthaltend mindestens eine Pfropfgrundlage B1 und zwei verschiedene Pfropfhüllen B2 (bzw. Pfropfhüllen B2' und B2") durch:
a1) Zugabe und Emulsionspolymerisation des Monomeren B21, insbesondere Styrol, in Gegenwart der Pfropfgrundlage B1, wobei Pfropfhülle B2' erhalten wird; und anschließende Zugabe und Emulsionspolymerisation der Monomere B21 und B22 wie oben beschrieben, insbesondere Styrol und Acrylnitril, in Gegenwart der mit B2' gepfropften Pfropfgrundlage B1, wobei Pfropfhülle B2" erhalten wird; und
a2) nach Beendigung der letzten Monomerzugabe in Schritt a1), Zugabe von mindestens einem Radikalfänger.

Für diese bevorzugten Ausführungsformen (ein- und zweistufige Pfropfung) gelten entsprechend die vorgenannten Definitionen betreffend Monomerzugabe, Radikalfänger und Reaktionsbedingungen (Zugabezeitpunkt Radikalfänger etc.).

Häufig ist das Pfropfcopolymer B komplex aufgebaut und besteht im Wesentlichen aus einer oder mehreren Pfropfgrundlage(n) B1 und einer oder mehreren Pfropfhülle(n) B2. Typischerweise wird das Pfropfcopolymer B in Form eines Latex (Kautschuk) durch Emulsionspolymerisation in Schritt a) hergestellt, wobei zunächst eine oder mehrere Pfropfgrundlage(n) B1 durch Emulsionspolymerisation der Monomere B11, B12 und gegebenenfalls B13 wie beschrieben und anschließend eine oder mehrere Pfropfhülle(n) B2 durch Emulsions-Pfropfpolymerisation der Monomeren B21 und B22 wie beschrieben in Gegenwart einer oder mehrerer der Pfropfgrundlagen B1 erhalten werden.

Vorzugsweise wird der Latex des Pfropfcopolymers B durch wässrige radikalische Emulsionspolymerisation polymerisiert. Die Reaktion wird typischerweise über wasserlösliche oder öllösliche radikalische Polymerisationsinitiatoren initiiert, z.B. anorganische oder organische Peroxide, wie Peroxodisulfat oder Benzoylperoxid, oder mit Hilfe von Redox-Initiatorsystemen (wie in WO 2002/10222, DE-A 28 26 925, sowie EP-A 022 200 beschrieben). Bevorzugt wird bei der Emulsionspolymerisation des Pfropfcopolymers B ein anorganisches Peroxidsalz, insbesondere ein anorganisches Peroxodisulfatsalz, vorzugsweise Natriumperoxodisulfat und/oder Kaliumperoxodisulfat, eingesetzt.

Als Emulgator bei der Herstellung der Pfropfgrundlage B1 und/oder bei der Emulsionspolymerisation zur Herstellung des mindestens einen Pfropfcopolymers B können übliche anionische Emulgatoren enthalten sein. Bevorzugt werden als Emulgatoren eingesetzt: Alkylsulfate, Alkylsulfonate, Alkylsulfonsäuren, Arylsulfonate, Seifen gesättigter oder ungesättigter Fettsäuren, sowie alkalisch disproportionierte oder hydrierte Abiat- oder Tallölsäuren oder deren Mischungen. Zur Herstellung von Pfropfgrundlagen auf Basis von Butadien werden bevorzugt Emulgatoren mit Carboxygruppen eingesetzt (z. B. disproportionierte Abiatsäure, Salze von C₁₀-C₁₈-Fettsäuren). Weiterhin bevorzugt für Pfropfgrundlagen auf Basis von Butadien können als Emulgatoren Alkaliseifen von Natrium- und Kaliumsalzen von disproportionierten und/oder dehydrierten und/oder hydrierten und/oder teilhydrierten Harzen (Kolophonium) mit mindestens 30 Gew.-% Gehalt an Dehydroabiatsäure und mit höchstens 1 Gew.-% Gehalt an Abiatsäure eingesetzt werden.

Zur Herstellung von Pfropfgrundlagen auf Basis von C₁-C₈-Alkyl(meth)acrylaten werden als Emulgator bevorzugt C₁₀-C₂₀-Alkylsulfonsäuren und/oder C₁₀-C₂₀-Alkylsulfonate, beispielsweise eine C₁₂-C₁₈-Alkylsulfonsäure, eingesetzt.

Weiterhin können bei der Emulsionspolymerisation der Pfropfgrundlage B1 und der Pfropfhülle B2 Salze, Säuren und Basen eingesetzt werden, insbesondere zur Einstellung des pH-Wertes oder zur Pufferung der Reaktionsmischung.

Beispielsweise können Schwefelsäure, Phosphorsäure, Lösungen von Natriumhydroxid, Kaliumhydroxid, Natriumsalze und Kaliumsalze von Carbonaten, Bicarbonaten, Sulfaten und/oder Phosphaten (z. B. Tetranatriumpyrophosphat) verwendet werden.

In einer bevorzugten Ausführungsform wird als Puffer mindestens ein Carbonat- und/oder Bicarbonatsalz, wie Natriumbicarbonat, verwendet.

Die Polymerisationstemperatur bei der Emulsionspolymerisation des Pfropfcopolymers B in Schritt a1) des erfindungsgemäßen Verfahrens beträgt im Allgemeinen 25 bis 95°C, vorzugsweise 40 bis 90°C. Konventionelle Temperierung, z.B. isotherm, kann hier verwendet werden; vorzugsweise wird die Pfropfpolymerisationsreaktion jedoch so geführt, dass die Temperaturdifferenz zwischen Beginn und Ende der Reaktion mindestens 2°C, bevorzugt mindestens 3°C, oftmals 2 bis 3°C, beträgt.

Erfindungsgemäß erfolgt die Herstellung des Pfropfcopolymers B mittels Emulsionspolymerisation. Dem Fachmann sind geläufige Ausführungsformen der Emulsionspolymerisationsreaktion im Batchbetrieb oder im kontinuierlichen Betrieb bekannt.

Insbesondere werden die Monomeren der Pfropfhülle B2, also die Monomeren B21 und B22, einzeln oder als Monomermischung in den angegebenen Mengen und Verhältnissen kontinuierlich der Pfropfgrundlage B1 zugesetzt und polymerisiert.

Die Zugabe der Monomeren zu der mindestens einen Pfropfgrundlage B1 erfolgt dabei üblicherweise in dem Fachmann bekannter Weise. Insbesondere kann das Pfropfcopolymer B zwei oder mehr Pfropfhüllen B2 enthalten, die durch schrittweise Polymerisation der Monomere B21 und/oder B22 hergestellt werden.

### Schritt b) Fällung des Latex des Pfropfcopolymers B

Das erfindungsgemäße Verfahren umfasst das Ausfällen des in Schritt a) erhaltenen Pfropfcopolymers B, wobei der Latex des Pfropfcopolymers B mit mindestens einer Fällungslösung PS gemischt wird, wodurch eine Fällungsmischung entsteht, wobei vorzugsweise die mindestens eine Fällungslösung PS mindestens ein Salz und/oder Säure enthält. Insbesondere enthält die Fällungslösung PS mindestens ein Erdalkalimetallsalz, vorzugsweise mindestens ein Salz von Magnesium und/oder Calcium; besonders bevorzugt mindestens ein Magnesiumsalz.

Insbesondere ist das mindestens eine Erdalkalimetallsalz ausgewählt aus Erdalkalimetallhalogeniden wie Chloriden, Erdalkalimetallsulfaten, Erdalkalimetallphosphaten wie Orthophosphate oder Pyrophosphate, Erdalkalimetallacetaten und Erdalkalimetallformiaten. Vorzugsweise ist das mindestens eine Erdalkalimetallsalz ausgewählt aus Chloriden und Sulfaten.

Bevorzugte Erdalkalimetallsalze sind hierbei Magnesiumsulfat (wie Kieserit (Mg[S04] · H₂0), Pentahydrit (Mg[S0₄] · 5H₂0), Hexahydrit (Mg[S0₄] · 6H₂0) und Epsomit (Mg[S0₄] · 7H₂0, Bittersalz), Magnesiumchlorid, Calciumchlorid, Calciumformiat, Magnesiumformiat oder Mischungen davon. Besonders bevorzugt ist die Verwendung von Magnesiumsulfat.

Insbesondere liegt der Feststoffgehalt der in Schritt b) erhaltenen Fällungsmischung im Bereich von 5 bis 20 Gew.-%, vorzugsweise 7 bis 18 Gew.-%, stärker bevorzugt 10 bis 18 Gew.-%, auch bevorzugt 12 bis 20 Gew.-%.

Vorzugsweise liegt der pH-Wert der in Schritt b) erhaltenen Fällungsmischung im Bereich von 5 bis 10, bevorzugt im Bereich von 6 bis 9, besonders bevorzugt 8 bis 9. Beispielsweise kann der pH-Wert durch Zugabe von Puffersalzen, Säuren und/oder Basen eingestellt werden, wobei beispielsweise Schwefelsäure, Phosphorsäure, Lösungen von Natriumhydroxid, Kaliumhydroxid, Natriumsalze und Kaliumsalze von Carbonaten (z. B. Natriumcarbonat Na₂CO₃ und/oder Natriumhydrogencarbonat NaHC0₃ oder Mischungen davon), Sulfate oder Phosphate (z. B. Tetranatriumpyrophosphat) verwendet werden.

Beispielsweise wird bevorzugt mindestens ein Puffersalz ausgewählt aus Natriumsalzen, insbesondere ausgewählt aus Natriumcarbonaten, Natriumsulfaten und Natriumphosphaten, vorzugsweise ausgewählt aus Natriumcarbonat Na₂C0₃ und Natriumhydrogencarbonat NaHC0₃, zugesetzt.

Die Zugabe der Puffersalze, Säuren und/oder Basen kann während der Schritte a) und/oder b), bevorzugt während der Herstellung des mindestens einen Pfropfcopolymers B (Emulsionspolymerisation, Schritt a) erfolgen.

Typischerweise werden in Schritt b) die Fällungslösung PS und der Pfropfcopolymer B-Latex über einen Zeitraum im Bereich von 5 bis 40 Minuten, vorzugsweise 5 bis 35 Minuten gemischt.

Die Fällung in Schritt b) wird bei einer Temperatur (= T1) von 30 bis 95°C, bevorzugt 40 bis 90°C, besonders bevorzugt 50 bis 90°C, ganz besonders bevorzugt 60 bis 88°C, durchgeführt. Vorzugsweise wird der Latex des Pfropfcopolymers B mit der mindestens einen Fällungslösung PS bei einer Temperatur (= T1) von 30 bis 95°C, bevorzugt 40 bis 90°C, besonders bevorzugt 50 bis 90°C, gemischt. Die Fällung erfolgt vorzugsweise in einem Fällbehälter (z.B. Fällkessel).

### Schritt c) Sinterung der Fällungsmischung

In Schritt c) des erfindungsgemäßen Verfahrens wird die in Schritt b) erhaltene Fällungsmischung bei einer Temperatur (= T2) von 85 bis 150°C, vorzugsweise 90 bis 145°C, insbesondere 90 bis 140°C, ganz besonders bevorzugt 92 bis 135°C, gesintert.

Die Temperatur (= T2) in Schritt c) ist im Allgemeinen mindestens 5°C, bevorzugt mindestens 10°C, besonders bevorzugt 15°C, höher ist als die Temperatur (= T1) in Schritt b).

Während der Sinterung wird die Fällungsmischung im Allgemeinen für mindestens 15 Minuten, bevorzugt für einen Zeitraum 15 bis 90 Minuten, besonders bevorzugt 15 bis 75 Minuten, ganz besonders bevorzugt 20 bis 60 Minuten, auf dieser Temperatur T2 gehalten. Durch die Sinterung werden die in der Fällungsmischung enthaltenen Pfropfcopolymerpartikel agglomeriert, so dass größere Partikel erhalten werden.

Das Ausfällen in Schritt b) und das Sintern in Schritt c) des erfindungsgemäßen Verfahrens kann in unterschiedlichen Behältern durchgeführt werden oder im gleichen Behälter, wobei Ausfällen und Sintern im gleichen Behälter insbesondere dann möglich ist, wenn das Verfahren batchweise betrieben wird, da in diesem Fall zunächst bei niedrigerer Temperatur der Pfropfcopolymer-Latex mit der Fällungslösung gemischt wird und anschließend bei höherer Temperatur die Pfropfcopolymerpartikel gesintert werden. Bevorzugt ist es daher, wenn für Schritt (b) ein Fällbehälter und für Schritt (c) ein Sinterbehälter verwendet werden, wobei der Sinterbehälter und der Fällbehälter zwei unterschiedliche Behälter sind.

### Schritt d) - Abkühlen der gesinterten Fällungsmischung

Es hat sich als vorteilhaft erwiesen, vor der mechanischen Entwässerung in Schritt e), die in Schritt c) des erfindungsgemäßen Verfahrens erhaltene gesinterte Fällungsmischung abkühlen zu lassen (optionaler Schritt d)), vorzugsweise auf eine Temperatur von 20 bis 90°C, oftmals 20 bis 80°C, sowie oftmals 20 bis 70°C. Zur Abkühlung der gesinterten Fällungsmischung kann z.B. ein Wärmetauscher eingesetzt werden.

### Schritt e) - Mechanische Entwässerung der gesinterten Fällungsmischung

In Schritt e) des erfindungsgemäßen Verfahrens wird eine mechanische Entwässerung der in Schritt c) oder d) erhaltenen gesinterten Fällungsmischung durchgeführt, wobei ein Pfropfcopolymer B mit einem Wassergehalt von gleich oder kleiner 50 Gew.-%, vorzugsweise gleich oder kleiner 40 Gew.-%, besonders bevorzugt 10 bis 35 Gew.-%, erhalten wird.

Der Wassergehalt (auch als Restfeuchte bezeichnet) des Pfropfcopolymers B nach der Entwässerung ist der Gehalt an Wasser in Gewichtsprozent, bezogen auf das nach der Entwässerung erhaltene feuchte Pfropfcopolymer B.

Der Wassergehalt wird insbesondere mit Hilfe geeigneter Analysegeräte (z. B. Trocknungs- und Wiegeeinrichtungen) bestimmt, wobei die Probe getrocknet wird, bis über einen definierten Zeitraum eine Gewichtskonstanz der Probe erreicht ist. Beispielsweise kann der Wassergehalt des Pfropfcopolymers B in einem Halogen Moisture Analyzer HR73 der Firma Mettler Toledo bei 180°C bestimmt werden bis für 30 Sekunden eine Gewichtskonstanz erreicht wird.

Insbesondere liegt der Wassergehalt des in Schritt e) erhaltenen entwässerten Pfropfcopolymers B im Bereich von 10 bis 50 Gew.-%, vorzugsweise 10 bis 40 Gew.-%, besonders bevorzugt 10 bis 35 Gew.-% (bezogen auf das gesamte entwässerte Pfropfcopolymer B).

Typischerweise umfasst Schritt e) des erfindungsgemäßen Verfahrens die mechanische Entwässerung des gesinterten Pfropfcopolymers B mittels kontinuierlicher oder diskontinuierlicher Zentrifugation und/oder Filtration. Vorzugsweise wird die mechanische Entwässerung des gesinterten Pfropfcopolymers B durch kontinuierliches Zentrifugieren erreicht.

Das gesinterte Pfropfcopolymer B wird typischerweise mit einer Zentripetalbeschleunigung von 200 bis 2200 g (wobei g die Erdbeschleunigung (1 g = 9,81 m/s) ist), vorzugsweise von 500 bis 1500 g, für einen Zeitraum von 1 Sekunde bis 5 Minuten, vorzugsweise 1 bis 120 Sekunden, zentrifugiert.

### Schritt f) - Optionales Waschen des entwässerten Pfropfcopolymers B

Die mechanische Entwässerung des Pfropfcopolymers B in Schritt e) kann kombiniert werden mit einem Waschschritt (z. B. auf einer Zentrifuge) oder kann gefolgt sein von einem Waschschritt (Schritt f)), wobei das entwässerte Pfropfcopolymer B vorzugsweise mit Wasser behandelt wird.

Weiterhin ist es möglich, eine Mischung aus Wasser und einem polaren, mit Wasser mischbaren organischen Lösungsmittel, wie Alkoholen, zu verwenden.

Vorzugsweise wird das Wasser oder die vorgenannte Wasser-Mischung nach der Behandlung des Pfropfcopolymers B durch Filtration und/oder Zentrifugation entfernt. Vorzugsweise wird in einem nachgeschalteten Waschschritt f) ein Pfropfcopolymer B mit einem Wassergehalt im Bereich von 10 bis 50 Gew.-%, bevorzugt 10 bis 40 Gew.-%, besonders bevorzugt 10 bis 35 Gew.-%, erhalten.

Es ist auch bevorzugt, dass ein Pfropfcopolymer B mit einem Wassergehalt, wie oben für Schritt e) beschrieben, erhalten wird.

### Schritt g) - Optionales Trocknen des entwässerten Pfropfcopolymers B

Das erfindungsgemäße Verfahren umfasst optional auch das Trocknen (Schritt g) des in Schritt e) oder f) erhaltenen - entwässerten und gegebenenfalls gewaschenen - Pfropfcopolymers B in bekannter Weise.

Beispielsweise kann das entwässerte und gegebenenfalls gewaschene Pfropfcopolymer B durch heißes Trocknungsgas, z.B. Luft oder mittels eines pneumatischen Trockners getrocknet werden. Die Trocknung kann beispielsweise in einem Schranktrockner oder anderen allgemein bekannten Trocknungsapparaten wie Stromtrockner oder Fließbetttrockner durchgeführt werden. Typischerweise wird der optionale Trocknungsschritt bei einer Temperatur des Trocknungsapparats oder des Trocknungsgases im Bereich von 50 bis 180°C, vorzugsweise von 55 bis 155°C, besonders bevorzugt von 60 bis 150°C, durchgeführt.

Typischerweise weist das erhaltene getrocknete Pfropfcopolymer B einen Wassergehalt unter 5 Gew.-%, bevorzugt unter 1 Gew.-%, bevorzugt im Bereich von 0,05 bis 0,8 Gew.- %, bevorzugt 0,1 bis 0,8 Gew.-%, auf.

Ein weiterer Gegenstand der Erfindung ist ein durch das erfindungsgemäße Verfahren erhaltenes Pfropfcopolymer B. Durch das erfindungsgemäße Verfahren erhaltene Pfropfcopolymere B zeichnen sich - im Vergleich zu Pfropfcopolymeren, denen kein Radikalfänger in Schritt a2) zugesetzt wurde - durch eine weiße oder nahezu weiße Farbe auch nach dem Sinterschritt aus und weisen einen niedrigen, deutlich reduzierten, Yellowness-Index (gemessen gemäß ASTM E313-10) auf.

Ein weiterer Gegenstand der Erfindung ist ein Verfahren zur Herstellung einer thermoplastischen Formmasse, enthaltend mindestens ein nach dem erfindungsgemäßen Verfahren erhaltenes Pfropfcopolymer B, und mindestens ein thermoplastisches Vinylaromat-Copolymer A, optional mindestens eine weitere polymere Komponente C ausgewählt aus Polycarbonaten, Polyamiden und Polyestern, und optional ein oder mehrere Additive und/oder Hilfsmittel D, durch Mischen der Komponenten, vorzugsweise in der Schmelze.

Vorzugsweise ist das mindestens eine thermoplastische Vinylaromat-Copolymer A ein kautschukfreies Polymer.

Bevorzugt ist das mindestens eine thermoplastische Vinylaromat-Copolymer A ein Copolymer hergestellt aus:
A1: 50 bis 95 Gew.-%, vorzugsweise 60 bis 90 Gew.-%, stärker bevorzugt 60 bis 85 Gew.-%, bezogen auf das Copolymer A, eines Monomers A1, ausgewählt aus Styrol, alpha-Methylstyrol und Mischungen aus Styrol und mindestens einem weiteren Monomer ausgewählt aus o-Methylstyrol, p-Methylstyrol und C₁-C₈-Alkyl(meth)acrylat;
A2: 5 bis 50 Gew.-%, bevorzugt 10 bis 40 Gew.-%, besonders bevorzugt 15 bis 40 Gew.-%, bezogen auf das Copolymer A, mindestens eines Monomers A2 ausgewählt aus Acrylnitril und Mischungen aus Acrylnitril und mindestens einem anderen Monomer, ausgewählt aus Methacrylnitril, Acrylamid, Vinylmethylether, Anhydriden von ungesättigten Carbonsäuren (z.B. Maleinsäureanhydrid oder Phthalsäureanhydrid) und Imiden von ungesättigten Carbonsäuren (z.B. N-substituierte Maleimide, wie N-Cyclohexylmaleimid oder N-Phenylmaleimid).

Bevorzugt wird das thermoplastische Copolymer A aus Mischungen von Styrol mit anderen Comonomeren A2 hergestellt.

Besonders bevorzugt ist A1 Styrol und A2 Acrylnitril, d.h. das thermoplastische Copolymer A ist ein Styrol-Acrylnitril-Copolymer (SAN).

Weiterhin besonders bevorzugt ist A1 (alpha)-Methylstyrol und A2 Acrylnitril, d.h. das thermoplastische Copolymer A ist ein (alpha)-Methylstyrol-Acrylnitril-Copolymer (AMSAN).

Als thermoplastisches Copolymer A kann im Rahmen des Gegenstands der vorliegenden Erfindung im Allgemeinen jedes dem Fachmann bekannte SAN- und/oder AMSAN-Copolymer verwendet werden.

Insbesondere ist das thermoplastische Copolymer A ausgewählt aus SAN- und/oder AMSAN-Copolymeren, die weniger als 36 Gew.-% Acrylnitril als Monomer A2, bezogen auf das Copolymer A, enthalten. Vorzugsweise enthält das thermoplastische Copolymer A das mindestens eine vinylaromatische Monomer A1, bevorzugt Styrol, in einer Menge von 50 bis 99 Gew.-%, bevorzugt 60 bis 95 Gew.-%, besonders bevorzugt 65 bis 90 Gew.-%, ganz besonders bevorzugt 65 bis 70 Gew.-%, und mindestens ein (Meth)acrylnitril Monomer A2, bevorzugt Acrylnitril, in einer Menge von 1 bis 50 Gew.-%, vorzugsweise 5 bis 40 Gew.-%, besonders bevorzugt 10 bis 35 Gew.-%, ganz besonders bevorzugt 30 bis 35 Gew.-%.

Insbesondere liegt das gewichtsmittlere Molekulargewicht (Mw) des thermoplastischen Copolymers A im Bereich von 15.000 bis 200.000 g/mol, bevorzugt im Bereich von 30.000 bis 150.000 g/mol. Typischerweise beträgt die zahlenmittlere Molmasse (Mn) des thermoplastischen Copolymers A 15.000 bis 100.000 g/mol.

Vorzugsweise kann das mittlere Molekulargewicht durch Gelpermeationschromatographie (GPC) relativ zu Polystyrol als Standard und unter Verwendung von zum Beispiel UV-Detektion bestimmt werden.

Vorzugsweise weist das thermoplastische Copolymer A eine Viskositätszahl VZ (bestimmt nach DIN 53726 bei 25°C, 0,5 Gew.-% in Dimethylformamid) von 50 bis 120 ml/g, bevorzugt von 50 bis 100 ml/g, besonders bevorzugt von 55 bis auf 85 ml/g.

In einer bevorzugten Ausführungsform ist das thermoplastische Copolymer A ein SAN (Styrol-Acrylnitril-Copolymer) oder AMSAN (alpha-Methylstyrol-Acrylnitril-Copolymer)-Copolymer, das ein mittleres Molekulargewicht und/oder eine mittlere Viskosität in den oben erwähnten Bereichen aufweist.

Das Copolymer A kann nach allen bekannten Verfahren hergestellt werden, beispielsweise Massepolymerisation, Lösungspolymerisation, Suspensionspolymerisation und Emulsionspolymerisation oder Mischverfahren, z.B. Masse-/Suspensionspolymerisationen, mit oder ohne weitere Komponenten.

Die Synthese von thermoplastischen Copolymeren A ist durch thermische Initiierung oder durch Zugabe von Initiatoren, insbesondere radikalischen Initiatoren, wie beispielsweise Peroxiden, möglich. Vorzugsweise werden thermoplastische Copolymere A durch Masse- oder Lösungspolymerisation hergestellt.

Besonders bevorzugt wird das thermoplastische Copolymer A aus den Komponenten Acrylnitril und Styrol und/oder alpha-Methylstyrol durch Substanzpolymerisation oder in Gegenwart eines oder mehrerer Lösungsmittel, beispielsweise Toluol oder Ethylbenzol, hergestellt.

Ein Polymerisationsverfahren ist beispielsweise beschrieben im Kunststoff-Handbuch, Vieweg-Daumiller, Band V, (Polystyrol), Carl-Hanser-Verlag, München 1969, Seiten 122 ff.

Gegebenenfalls enthält die thermoplastische Formmasse 0 bis 90 Gew.-%, vorzugsweise 0 bis 60 Gew.-%, oft 0 bis 30 Gew.-%, bezogen auf die gesamte Formmasse mindestens einer weiteren Polymerkomponente C. Vorzugsweise ist die optionale Polymerkomponente C ausgewählt aus Polycarbonaten (einschließlich aromatischer Polycarbonate und aromatischer Polyestercarbonate), Polyamiden und Polyestern, besonders bevorzugt aus Polycarbonaten und Polyamiden.

Vorzugsweise ist die mindestens eine weitere Polymerkomponente C mindestens ein aromatisches Polycarbonat und/oder mindestens ein aromatisches Polyestercarbonat.

Geeignete aromatische Polycarbonate und/oder aromatische Polyestercarbonate sind im Stand der Technik beschrieben und können nach bekannten Verfahren hergestellt werden. Besonders geeignete aromatische Polycarbonate und aromatische Polyestercarbonate und deren Herstellung sind in DE-A 2 714 544, DE-A 3 000 610, DE-A 3 832 396 und DE-A 3 077 934 beschrieben.

Vorzugsweise handelt es sich bei dem als Komponente C eingesetzten aromatischen Polycarbonat um ein Polycarbonat auf Basis von Bisphenol A und Phosgen, wozu auch Polycarbonate gehören, die aus entsprechenden Vorstufen oder Synthesebausteinen von Bisphenol A und Phosgen hergestellt wurden.

Ebenfalls bevorzugt kann die mindestens eine weitere Polymerkomponente C mindestens ein Polyamid sein, ausgewählt aus Homo-Polyamiden, Co-Polyamiden und Mischungen solcher Polyamide. Geeignete Polyamide und Verfahren zu ihrer Herstellung sind aus dem Stand der Technik bekannt. Besonders geeignete teilkristalline Polyamide sind Polyamid-6, Polyamid-6,6, Mischungen und entsprechende Copolymere dieser Komponenten.

Insbesondere kann die nach dem erfindungsgemäßen Verfahren erhaltene thermoplastische Formmasse 0 bis 10 Gew.-%, vorzugsweise 0 bis 5 Gew.-%, oftmals 0,1 bis 5 Gew.-%, bezogen auf die gesamte thermoplastische Formmasse, mindestens eines Additivs und/oder Hilfsmittels D enthalten.

Besonders bevorzugt ist das mindestens eine Additiv und/oder Hilfsmittel D in einer Menge von 0,001 bis 10 Gew.-%, besonders bevorzugt 0,01 bis 5 Gew.-%, bezogen auf die gesamte thermoplastische Formmasse, enthalten.

Insbesondere ist das Additiv und/oder Hilfsmittel D keine polymere Verbindung.

Das optionale Additiv und/oder Hilfsmittel D kann aus allgemein bekannten Additiven und/oder Hilfsstoffen für Kunststoffmaterialien ausgewählt werden. Bezüglich üblicher Hilfs- und Zusatzstoffe wird beispielhaft auf "Plastics Additives Handbook", Ed. Gächter und Müller, 4. Auflage, Hanser Verlag, München, 1996 verwiesen. Beispielsweise kann das mindestens eine Additiv und/oder Hilfsmittel D ausgewählt sein aus Füllstoffen, Verstärkungsmitteln, Farbstoffen, Pigmenten, Gleit- oder Entformungsmitteln, Stabilisatoren, insbesondere Licht- und Wärmestabilisatoren, Antioxidantien, UV-Absorbern, Weichmachern, Antistatika, Flammschutzmitteln, Bakteriziden, Fungiziden, optischen Aufhellern und Treibmitteln.

Das optionale Additiv und/oder Hilfsmittel D ist vorzugsweise ausgewählt aus Farbstoffen, Pigmenten, Gleit- oder Entformungsmitteln, Stabilisatoren, insbesondere Lichtschutzmitteln, Antistatika, Flammschutzmitteln und Füllstoffen, insbesondere mineralischen Füllstoffen.

Die Erfindung richtet sich bevorzugt auf ein Verfahren zur Herstellung einer thermoplastischen Formmasse enthaltend (bevorzugt bestehend aus):
A: 5 bis 95 Gew.-%, bevorzugt 30 bis 95 Gew.-%, besonders bevorzugt 40 bis 90 Gew.-% mindestens eines thermoplastischen Copolymers A hergestellt aus:
   A1: 50 bis 95 Gew.-%, vorzugsweise 60 bis 90 Gew.-%, stärker bevorzugt 60 bis 85 Gew.-%, bezogen auf das Copolymer A, eines Monomers A1, ausgewählt aus Styrol, alpha-Methylstyrol und Mischungen aus Styrol und mindestens einem weiteren Monomer ausgewählt aus o-Methylstyrol, p-Methylstyrol und C₁-C₈-Alkyl(meth)acrylat;
   A2: 5 bis 50 Gew.-%, bevorzugt 10 bis 40 Gew.-%, besonders bevorzugt 15 bis 40 Gew.-%, bezogen auf das Copolymer A, mindestens eines Monomers A2 ausgewählt aus Acrylnitril und Mischungen aus Acrylnitril und mindestens einem anderen Monomer, ausgewählt aus Methacrylnitril, Acrylamid, Vinylmethylether, Anhydriden von ungesättigten Carbonsäuren (z.B. Maleinsäureanhydrid oder Phthalsäureanhydrid) und Imiden von ungesättigten Carbonsäuren (z.B. N-substituierte Maleimide, wie N-Cyclohexylmaleimid oder N-Phenylmaleimid).
B: 5 bis 95 Gew.-%, vorzugsweise 5 bis 70 Gew.-%, besonders bevorzugt 10 bis 60 Gew.-% mindestens eines Pfropfcopolymers B wie oben definiert;
C: 0 bis 90 Gew.-%, bevorzugt 0 bis 80 Gew.-%, oftmals 0 bis 30 Gew.-% mindestens einer weiteren polymeren Komponente C, und
D: 0 bis 10 Gew.-%, vorzugsweise 0 bis 5 Gew.-%, häufig 0,1 bis 5 Gew.-% mindestens eines Additivs und/oder Hilfsmittels D; und

wobei das Verfahren die folgenden Schritte umfasst: a), b), c), e) und optional d), f) und/oder g) wie oben beschrieben; und
h) Mischen des thermoplastischen Copolymers A und des mindestens einen Pfropfcopolymers B, sowie optional mindestens einer weiteren polymeren Komponente C und/oder optional mindestens eines Additivs und/oder Hilfsmittels D.

Verfahren und Vorrichtungen zum Mischen des Pfropfcopolymers B mit dem thermoplastischen Polymer A und optional der weiteren Polymerkomponente C und/oder Additivs und/oder Hilfsmittels D sind dem Fachmann bekannt.

Mögliche Mischvorrichtungen zur Durchführung der Compoundierung sind beispielsweise diskontinuierlich arbeitende beheizte Innenmischer mit oder ohne Stempel, kontinuierliche Kneter wie kontinuierliche Innenmischer, Schneckenkneter mit axial oszillierenden Schnecken, Banbury-Mischer, kontinuierliche Extruder und Walzwerke, Mischwerke mit beheizten Walzen und Kalander.

Typischerweise umfasst Mischschritt h) Schmelzcompoundieren und/oder Schmelzextrusion und kann typischerweise unter Verwendung von einem oder mehreren Knetern, Extrudern und/oder Doppelwellenschnecken durchgeführt werden. Für die Schmelzextrusion sind beispielsweise Ein- oder Zweischneckenextruder besonders geeignet. Bevorzugt ist die Verwendung eines Doppelschneckenextruders.

Das Mischen in Schritt h) kann nacheinander oder gleichzeitig erfolgen.

Weiterhin ist es geeignet, einige oder alle Komponenten bei einer Temperatur von 15 bis 40 °C, beispielsweise bei Raumtemperatur, in einem ersten Schritt zu mischen und anschließend - in einem zweiten Schritt - die Temperatur auf 200 bis 300 °C zu erhöhen, gegebenenfalls unter Zugabe von weiteren Komponenten.

Vorzugsweise wird das Mischen in Schritt h) bei Temperaturen im Bereich von 100 bis 400°C, vorzugsweise 180 bis 300°C, durchgeführt. Typischerweise hängt diese Temperatur von den chemischen und physikalischen Eigenschaften der Komponenten ab.

Typischerweise sollte sie so ausgewählt werden, dass eine im Wesentlichen geschmolzene Polymermischung erreicht wird. Der Begriff "geschmolzen" bedeutet in diesem Zusammenhang, dass alle Komponenten, insbesondere die polymeren Komponenten, geschmolzen sind, mit Ausnahme derer, die nicht geschmolzen werden sollen, z. B. Glasfasern oder Pigmentpartikel. Andererseits sollte die Temperatur nicht unnötig hoch sein, um eine thermische Schädigung der Polymermischung zu vermeiden. Die Mischvorrichtung wird üblicherweise bei Temperaturen von 150 bis 400°C, vorzugsweise 180 bis 300°C, betrieben und weist typischerweise unterschiedliche Temperaturzonen auf, wie dem Fachmann bekannt ist.

Das Mischen des thermoplastischen Copolymers A, des mindestens einen Pfropfcopolymers B und gegebenenfalls weiterer Komponenten C und D kann in bekannter Weise nacheinander oder gleichzeitig erfolgen. Weiterhin ist es möglich, einige Komponenten zunächst bei Temperaturen von 15 bis 40°C, insbesondere bei Raumtemperatur (ca. 20°C), zu mischen und dann die Temperatur auf 200 bis 300°C zu erhöhen, gegebenenfalls unter Zugabe von anderen Komponenten.

Weiterhin betrifft die Erfindung eine thermoplastische Formmasse und daraus hergestellte Formkörper, wobei die thermoplastische Formmasse durch das erfindungsgemäße Verfahren zur Herstellung einer thermoplastischen Formmasse enthaltend das Pfropfcopolymer B wie beschrieben und mindestens ein thermoplastisches Vinylaromat-Copolymer A erhalten wird.

Die thermoplastischen Formmassen können zur Herstellung von Formkörpern wie Platten oder Halbzeugen, Folien, Fasern oder auch Schäumen und den entsprechenden Formkörpern wie Platten, Halbzeugen, Folien, Fasern oder Schäumen verwendet werden. Die Verarbeitung kann nach den bekannten Verfahren der thermoplastischen Verarbeitung erfolgen, insbesondere kann die Herstellung durch Tiefziehen, Extrudieren, Spritzgießen, Kalandrieren, Blasformen, Pressen, Presssintern, Tiefziehen oder Sintern, vorzugsweise durch Spritzgießen, erfolgen.

Die erfindungsgemäßen Formmassen können zur Herstellung von Formkörpern jeglicher Art verwendet werden. Diese können über Spritzguss-, Extrusions- und Blasformverfahren hergestellt werden. Eine weitere Verarbeitungsart ist die Herstellung von Formteilen durch Thermoformen aus zuvor hergestellten Platten oder Folien und das Verfahren des Folienumspritzens.

Beispiele für diese Formteile sind Folien, Profile, Gehäuseteile jeglicher Art, z.B. für Haushaltsgeräte wie Saftpressen, Kaffeemaschinen, Mixer; für Bürogeräte wie Monitore, Drucker, Kopierer; Außen- und Innenteile von Kraftfahrzeugen; Bleche, Rohre, Elektroinstallationskanäle, Fenster, Türen und andere Profile für den Baubereich (Innenausbau und Außenanwendungen) sowie Teile für elektrische und elektronische Anwendungen wie Schalter, Stecker und Steckdosen.

Insbesondere können die erfindungsgemäßen Formmassen beispielsweise zur Herstellung folgender Formkörper verwendet werden: Teile für die Innenausstattung von Schienenfahrzeugen, Schiffen, Flugzeugen, Bussen und anderen Kraftfahrzeugen, Karosserieteile für Motoren Fahrzeuge, Gehäuse für elektrische Geräte mit Kleintransformatoren, Gehäuse für Geräte zur Verarbeitung und Übertragung von Informationen, Gehäuse und Verkleidungen für medizinische Geräte, Massagegeräte und Gehäuse dafür, Spielzeugfahrzeuge für Kinder, flächige Wandelemente, Gehäuse - Formteile für Sicherheitseinrichtungen, wärmeisolierte Transportbehälter, Apparate zur Haltung oder Pflege von Kleintieren, Formteile für Sanitär- und Badeinrichtungen, Schutzgitter für Lüftungsöffnungen, Formteile für Garten- und Gerätehäuser, Gehäuse für Gartengeräte.

Die Erfindung wird detaillierter durch die folgenden Beispiele und Ansprüche beschrieben.

### Beispiele

Im Folgenden ist unter "Teile", Gewichtsteile zu verstehen, wenn nicht anders angegeben.

Beispiel 1

Herstellung von Styrol-co-Acrylnitril-gepfropften Polybutylacrylat-Latices

### (Pfropfcopolymer B)

Der Pfropfcopolymer-B-Latex wurde wie folgt hergestellt:
Pfropfgrundlage B1
Saatlatex BS

Das Reaktionsgefäß wurde mit 132,6 Teilen demineralisiertem Wasser, 1,0 Teilen des Natriumsalzes einer C₁₂-C₁₈-Alkylsulfonsäure und 0,41 Teilen Natriumbicarbonat beschickt. Als die Temperatur im Reaktionsgefäß 59°C erreicht hatte, wurden 0,30 Teile Kaliumpersulfat, gelöst in 9,7 Teilen demineralisiertem Wasser, zugegeben. Dazu wurde innerhalb von 210 Minuten eine Mischung aus 98 Teilen Butylacrylat und 2 Teilen Tricyclodecenylacrylat gegeben und polymerisiert. Danach wurde die Reaktion für weitere 60 Minuten fortgesetzt und dann ließ man auf Raumtemperatur abkühlen. Danach wurde eine Mischung aus 1,0 Teilen des Natriumsalzes einer C₁₂-C₁₈-Alkylsulfonsäure in 12,9 Teilen Wasser zugegeben. Die erhaltene Polymer-Dispersion hatte einen Gesamtfeststoffgehalt von 38,5% und die Latexteilchen hatten einen mittleren Teilchendurchmesser Dv (bestimmt durch Lichtstreuung, Beckman Coulter) von 83 nm.

### Polystyrol-Latex B1-1

Das Reaktionsgefäß wurde mit 57,7 Teilen demineralisiertem Wasser, 5,1 Teilen (= 2,0 Teile bezogen auf Kautschuk) des zuvor beschriebenen Saatlatex (Teilchendurchmesser 83 nm) und 0,05 Teilen Natriumhydrogencarbonat beschickt. Die Reaktionsmischung wurde auf 70°C erhitzt und dann wurden 0,07 Teile Kaliumpersulfat, gelöst in 2,4 Teilen demineralisiertem Wasser, zu der Reaktionsmischung gegeben. Dazu wurde innerhalb von 290 Minuten eine Mischung aus 23,8 Teilen Styrol und 0,7 Teilen Tricyclodecenylacrylat unter Rühren bei 70°C zugegeben. Parallel dazu wurde dem Reaktionsgemisch innerhalb von 290 min eine Lösung von 0,4 Teilen des Natriumsalzes einer C₁₂-C₁₈-Alkylsulfonsäure in 27,5 Teilen entmineralisiertem Wasser zugesetzt. Das Reaktionsgemisch wurde weitere 60 min bei 70 °C gerührt. Die erhaltene Dispersion (Polystyrol-Latex B1-1) hatte einen Gesamtfeststoffgehalt von 22,2 Gew.-% und die Latexteilchen hatten einen mittleren Teilchendurchmesser Dv (bestimmt durch Lichtstreuung) von 179 nm.

Zu der erhaltenen Dispersion des Polystyrol-Latex B1-1 wurden 40,3 Teile demineralisiertes Wasser und 0,44 Teile Natriumhydrogencarbonat gegeben. Nach Erhitzen des Reaktionsgemischs auf 60°C wurden 0,44 Teile Kaliumpersulfat, gelöst in 14,2 Teilen demineralisiertem Wasser, zugegeben. Dazu wurde eine Mischung aus 72,1 Teilen Butylacrylat und 1,5 Teilen Tricyclodecenylacrylat innerhalb von 210 Minuten gegeben und polymerisiert.

Parallel zum ersten Zulauf wurde noch eine Lösung von 0,5 Teilen des Natriumsalzes einer C₁₂-C₁₈-Alkylsulfonsäure in 17,8 Teilen vollentsalztem Wasser über einen Zeitraum von 210 Minuten zugegeben. Danach wurde die Reaktion 60 Minuten bei 60°C fortgesetzt. Die erhaltene Polymerdispersion (Pfropfgrundlage B1 mit innerem harten Kern und weichem äußeren Kern) hatte einen Gesamtfeststoffgehalt von 37,7 % und der mittlere Teilchendurchmesser Dv (bestimmt durch Lichtstreuung) der Latexteilchen betrug 276 nm.

### (a) Herstellung einer Pfropfhülle B2 (2-stufig B2' und B2")

In das Reaktionsgefäß wurden 69 Teile entmineralisiertes Wasser, 162 Teile der Dispersion des Latex B1 (61 Teile, bezogen auf Kautschuk) und 0,06 Teile des Natriumsalzes einer C₁₂-C₁₈-Alkylsulfonsäure gefüllt. Nach Erhitzen des Reaktionsgemischs auf 61°C wurden 0,16 Teile Kaliumpersulfat, gelöst in 7,8 Teilen entmineralisiertem Wasser, dem Reaktionsgemisch zugesetzt. Danach wurden innerhalb von 60 Minuten 12 Teile Styrol unter Rühren zugegeben, gefolgt von einer Nachpolymerisationszeit von 30 Minuten. Dann wurde ein Gemisch aus 21 Teilen Styrol und 7 Teilen Acrylnitril über einen Zeitraum von 165 min zugegeben. Die Temperatur wurde in dieser Zeit von 61 °C auf 65°C erhöht. Dann wurde die Reaktion bei 65 °C für weitere 60 Minuten fortgesetzt. Dann wurden 0,38 Teile einer 85%-igen Lösung von N,N-Di-ethylhydroxylamin (DEHA) in Wasser zugegeben und das Reaktionsgemisch wurde weitere 60 Minuten bei 65°C gerührt. Danach ließ man das Reaktionsgemisch auf Raumtemperatur abkühlen.

Eine Dispersion eines Pfropfcopolymers B-1 (2-stufig gepropfte Propfgrundlage B1-1 mit einer ersten Pfropfhülle B2' aus Styrol und einer zweiten Pfropfhülle B2" aus Styrol und Acrylnitril) wurde erhalten. Die erhaltene Dispersion des Pfropfcopolymers B wies einen Gesamtfeststoffgehalt von 34,9 Gew.-% auf. Die Pfropfcopolymer-Latexpartikel hatten einen mittleren Partikeldurchmesser Dv von 343 nm (bestimmt mittels Lichtstreuung).

### b) Fällung des Pfropfcopolymer B-Latex

140 g einer MgSO4-Lösung (20,3 Gew.-%) wurden mit 1650 g demineralisiertem Wasser vermischt. 360 g dieser Lösung wurden als Vorbeschickung verwendet und auf 70 °C erhitzt. 1000 g des Polymerlatex aus Schritt a) und 1430 g der verbliebenen verdünnten MgSO₄-Lösung wurden getrennt innerhalb von 10 Minuten zugegeben, während die Temperatur bei 70°C gehalten wird.

### c) Sinterung der Fällungsmischung und d) Abkühlen

Die in Schritt b) erhaltene Fällungsmischung wurde innerhalb von 30 Minuten auf eine Temperatur von 125°C erhitzt (Sinterung) und nach Erreichen einer Temperatur von 125 °C wurde das Heizen gestoppt und man ließ die Fällungsmischung auf Raumtemperatur abkühlen.

### e) Entwässerung, f) Waschen und g) Trocknen

Die erhaltene (gesinterte und abgekühlte) Fällungsmischung wurde zentrifugiert und einmal mit 500 ml entmineralisiertem Wasser gewaschen.

Das entwässerte, gewaschene Pfropfcopolymer B wurde in einem Laborofen bei 70°C für 2 Tage getrocknet und ein Pulver des Pfropfcopolymers B erhalten. Das getrocknete Pfropfcopolymer B hatte einen Wassergehalt von etwa 0,25 Gew.-%.

### Beispiel 2

Die Herstellung eines Propfcopolymers B mit einer 2-stufigen Pfropfhülle B2' und B2" erfolgte analog zu Beispiel 1, allerdings erfolgte in Schritt a) die Zugabe von DEHA 30 Minuten nach Beendigung der Zugabe von Styrol und Acrylnitril. Die erhaltene Dispersion des Pfropfcopolymers B wies einen Gesamtfeststoffgehalt von 35,8 Gew.-% auf. Die Pfropfcopolymer-Latexpartikel hatten einen mittleren Partikeldurchmesser Dv von 346 nm (bestimmt mittels Lichtstreuung).

### Beispiel 3

Die Herstellung eines Propfcopolymers B mit einer 2-stufigen Pfropfhülle B2' und B2" erfolgte analog zu Beispiel 1, allerdings erfolgte in Schritt a) die Zugabe von DEHA unmittelbar nach Beendigung der Zugabe von Styrol und Acrylnitril. Die erhaltene Dispersion des Pfropfcopolymers B wies einen Gesamtfeststoffgehalt von 37,7 Gew.-% auf. Die Pfropfcopolymer-Latexpartikel hatten einen mittleren Partikeldurchmesser Dv von 345 nm (bestimmt mittels Lichtstreuung).

### Vergleichsbeispiel 1

Die Herstellung eines Propfcopolymers B mit einer 2-stufigen Pfropfhülle B2' und B2" erfolgte analog zu Beispiel 1, allerdings in Schritt a2) kein Radikalfänger zugegeben.

Im Filtrat von Proben der Beispiele 1, 2 und 3 wurde eine Restmonomer-Bestimmung von Acrylnitril (AN), gemessen durch Headspace GC-FID mit externer Kalibrierung unter Verwendung von Mesitylen und Proprionitril als interner Standardlösung in DMSO, wie folgt vorgenommen:
17.5 mL VE-Wasser und 1.4 g MgSO4-Lösung wurden vorgelegt. 4 mL Latexdispersion wurden zugegeben, sodass eine vollständige Fällung auftrat. Sofort danach wurde der ausgefallene Feststoff über einen Faltenfilter abfiltriert und das gesamte Filtrat als Probe zur Restmonomer-Bestimmung aufgefangen und mittels GC-FID wurde AN quantifiziert.

Folgende Mengen von AN in Wasser wurden gemessen:
Zugabe DEHA unmittelbar: 420 ppm AN
Zugabe DEHA nach 30 Minuten: 175 ppm AN
Zugabe DEHA nach 60 Minuten: 100 ppm AN.

Der Yellowness-Index (YI) wurde für die erhaltenen Pfropfcopolymere der Beispiele 1 bis 3, sowie des Vergleichsbeispiels 1 (V1), gemäß ASTM E313-10 ermittelt (s. Tab. 1). Dazu wurde das jeweilige Pfropfcopolymerpulver zwischen 2 Objektträgern fixiert. Tabelle 1

| Beispiel | Zugabe DEHA | YI |
|---|---|---|
| 3 | unmittelbar | 0,72 |
| 2 | nach 30 min | 1,07 |
| 1 | nach 60 min | 1,45 |
| V1 | keine | 2,2 |

Die erfindungsgemäß erhaltenen Pfropfcopolymere B der Beispiele 1 bis 3, denen - nach Beendigung des Monomerzulaufs von Styrol und Acrylnitril - DEHA als Radikalfänger zugesetzt wurde, zeigen einen um bis zu 70% reduzierten Yellowness-Index im Vergleich zu einem entsprechenden Pfropfcopolymer V1, dem in Schritt a) kein Radikalfänger zugesetzt wurde.

Die nach dem erfindungsgemäßen Verfahren erhaltenen Pfropfcopolymerpulver B besitzen eine weiße bzw. nahezu weiße Farbe.

Verschiedene ASA-Copolymere wurden nach dem erfindungsgemäßen Verfahren hergestellt und getestet, sie hatten verbesserte Farbeigenschaften. Auch wurden entsprechende Formkörper aus ASA hergestellt und untersucht.

## Patentansprüche

1. Verfahren zur Herstellung mindestens eines Pfropfcopolymers B enthaltend:
B1: 40 bis 90 Gew.-%, bezogen auf das Pfropfcopolymer B, mindestens einer Pfropfgrundlage B1, erhalten durch Emulsionspolymerisation von:
B11 50 bis 100 Gew.-%, bezogen auf die Pfropfgrundlage B1, mindestens einem Monomer B11 ausgewählt aus C₁-C₈-Alkyl(meth)acrylat und Butadien;
B12 0 bis 10 Gew.-%, bezogen auf die Pfropfgrundlage B1, mindestens eines mehrfunktionellen Vernetzungsmonomers B12;
B13 0 bis 50 Gew.-%, bezogen auf die Pfropfgrundlage B1, mindestens eines weiteren Monomers B13 ausgewählt aus Styrol, alpha-Methylstyrol, C₁-C₄-Alkylstyrol, Acrylnitril, Methacrylnitril, Isopren, Chloropren, Methylmethacrylat, Alkylenglykoldi(meth)acrylat und Vinylmethylether;
wobei die Summe von B11, B12 und B13 100 Gew.-% ist; und
B2: 10 bis 60 Gew.-%, bezogen auf das Pfropfcopolymer B, mindestens einer Pfropfhülle B2, die - in Gegenwart der mindestens einen Pfropfgrundlage B1 - erhalten wird durch Emulsionspolymerisation von:
B21 50 bis 100 Gew.-%, bezogen auf die Pfropfhülle B2, mindestens eines vinylaromatischen Monomeren B21, ausgewählt aus Styrol, alpha-Methylstyrol oder Mischungen aus Styrol und mindestens einem weiteren Monomer ausgewählt aus alpha-Methylstyrol, p-Methylstyrol und C₁-C₈-Alkyl(meth)acrylat; und
B22 0 bis 50 Gew.-%, bezogen auf die Pfropfhülle B2, mindestens eines Monomers B22 ausgewählt aus Acrylnitril oder Mischungen aus Acrylnitril und mindestens einem weiteren Monomer ausgewählt aus Methacrylnitril, Acrylamid, Vinylmethylether, Anhydriden ungesättigter Carbonsäuren und Imiden ungesättigter Carbonsäuren;
wobei die Summe von B21 und B22 100 Gew.-% ist; und
wobei mindestens eine Pfropfhülle B2, durch Emulsionspolymerisation von 50 bis 95 Gew.-% mindestens eines Monomers B21 und 5 bis 50 Gew.-% mindestens eines Monomers B22 erhalten wird;
wobei die Summe der mindestens einen Pfropfgrundlage B1 und der mindestens einen Pfropfhülle B2 100 Gew.-% ergibt; und wobei
das Verfahren die folgenden Schritte umfasst:
a) Herstellung eines Latex des mindestens einen Pfropfcopolymers B umfassend:
a1) Zugabe und Emulsionspolymerisation von Monomeren B21 und B22 in Gegenwart der mindestens einen Pfropfgrundlage B1 zur Bildung der mindestens einen Pfropfhülle B2; und
a2) nach Beendigung der letzten Monomerzugabe in Schritt a1), Zugabe von mindestens einem Radikalfänger;
b) Fällung des in Schritt a) erhaltenen Pfropfcopolymer-B-Latex bei einer Temperatur von 30 bis 95°C, wobei der Pfropfcopolymer-B-Latex mit mindestens einer Fällungslösung PS gemischt wird, wodurch eine Fällungsmischung entsteht;
c) Sinterung der in Schritt b) erhaltenen Fällungsmischung bei einer Temperatur von 85 bis 150°C, bevorzugt für 15 bis 90 Minuten,
wobei die Temperatur in Schritt c) mindestens 5°C höher ist als die Temperatur in Schritt b);
d) gegebenenfalls Abkühlen der gesinterten Fällungsmischung aus Schritt c), vorzugsweise auf eine Temperatur von 20 bis 90°C;
e) mechanische Entwässerung der in Schritt c) oder d) erhaltenen gesinterten Fällungsmischung, wobei ein Pfropfcopolymer B mit einem Wassergehalt gleich oder kleiner 50 Gew.-% erhalten wird;
f) gegebenenfalls Waschen des Pfropfcopolymers B, erhalten in Schritt e);
g) gegebenenfalls Trocknen des in Schritt e) oder f) erhaltenen Pfropfcopolymers B.

2. Verfahren nach Anspruch 1, **dadurch gekennzeichnet, dass** die mindestens eine Pfropfgrundlage B1 durch Emulsionspolymerisation erhalten wird von:
B11: 80 bis 99,9 Gew.-%, bezogen auf die Pfropfgrundlage B1, mindestens ein C₁-C₈-Alkyl(meth)acrylat als Monomer B11;
B12: 0,1 bis 10 Gew.-%, bezogen auf die Pfropfgrundlage B1, mindestens eines polyfunktionellen Vernetzungsmonomers B12;
B13: 0 bis 19,9 Gew.-%, bezogen auf die Pfropfgrundlage B1, mindestens eines weiteren Monomeren, ausgewählt aus Styrol, alpha-Methylstyrol, C₁-C₄-Alkylstyrol, Acrylnitril, Methacrylnitril, Isopren, Chloropren, Methylmethacrylat, Alkylenglykoldi(meth)acrylat und Vinylmethylether;
wobei die Summe von B11, B12 und B13 gleich 100 Gew.-% ist.

3. Verfahren nach Anspruch 1 oder 2, **dadurch gekennzeichnet, dass** das mindestens eine Pfropfcopolymer B enthält:
B1: 50 bis 70 Gew.-%, bezogen auf das Pfropfcopolymer B, genau einer Pfropfgrundlage B1; und
B2: 30 bis 50 Gew.-%, bezogen auf das Pfropfcopolymer B, genau einer Pfropfhülle B2 erhalten durch Emulsionspolymerisation - in Gegenwart der Pfropfgrundlage B1 - von:
B21: 50 bis 95 Gew.-%, bezogen auf die Pfropfhülle B2, mindestens eines vinylaromatischen Monomeren B21, ausgewählt aus Styrol, (alpha)-Methylstyrol oder Mischungen von Styrol mit (alpha)-Methylstyrol oder Methyl(meth)acrylat; und
B22: 5 bis 50 Gew.-%, bezogen auf die Pfropfhülle B2, mindestens eines Monomers B22, ausgewählt aus Acrylnitril oder Mischungen aus Acrylnitril und Methacrylnitril;
wobei die Gesamtsumme aus Pfropfgrundlage B1 und Pfropfhülle B2 100 Gew.-% beträgt, und wobei der in Schritt a) erhaltene Latex des Pfropfcopolymers B eine mittels Lichtstreuung ermittelte Teilchengröße im Bereich von 50 bis 150 nm aufweist.

4. Verfahren nach Anspruch 1 oder 2, **dadurch gekennzeichnet, dass** das Pfropfcopolymer B enthält:
B1: 50 bis 70 Gew.-%, bezogen auf das Pfropfcopolymer B, mindestens einer Pfropfgrundlage B1; und
B2': 10 bis 30 Gew.-%, bezogen auf das Pfropfcopolymer B, mindestens einer Pfropfhülle B2', erhalten durch Emulsionspolymerisation - in Gegenwart von Pfropfgrundlage B1 - von:
B21': 100 Gew.-%, bezogen auf Pfropfhülle B2', mindestens eines vinylaromatischen Monomers B21, ausgewählt aus Styrol, (alpha)-Methylstyrol oder einer Mischung aus Styrol und mindestens einem weiteren Monomer ausgewählt aus (alpha)-Methylstyrol, p-Methylstyrol und C₁-C₄-Alkyl(meth)acrylat; und
B2": 20 bis 40 Gew.-%, bezogen auf das Pfropfcopolymer B, mindestens einer Pfropfhülle B2", erhalten durch Emulsionspolymerisation - in Gegenwart von mit B2' gepfropfter Pfropfgrundlage B1 - von:
B21": 65 bis 90 Gew.-%, bezogen auf die Pfropfhülle B2", mindestens eines vinylaromatischen Monomers B21", ausgewählt aus Styrol, (alpha)-Methylstyrol oder Mischungen aus Styrol und (alpha)-Methylstyrol oder Methyl(meth)acrylat; und
B22": 10 bis 35 Gew.-%, bezogen auf die Pfropfhülle B2", mindestens eines Monomers B22", ausgewählt aus Acrylnitril oder Mischungen aus Acrylnitril und Methacrylnitril;
wobei die Gesamtsumme aus Pfropfgrundlage B1, Pfropfhülle B2' und Pfropfhülle B2" 100 Gew.-% beträgt, und wobei der in Schritt a) erhaltene Latex des Pfropfcopolymers B eine mittels Lichtstreuung ermittelte Teilchengröße im Bereich von 250 bis 700 nm aufweist.

5. Verfahren nach einem der Ansprüche 1, 2 oder 4, **dadurch gekennzeichnet, dass** das Pfropfcopolymer B eine Kern-Schale-Struktur BS, BK1, BK2, BH1, BH2 aufweist, wobei die Pfropfgrundlage B1 umfasst: gegebenenfalls einen inneren Kern BS aus mindestens einem, gegebenenfalls vernetzten, C₂-C₈-Alkylacrylat, einen inneren Kern BK1 oder - falls BS vorhanden - eine Kernschale BK1 bestehend aus mindestens einem, gegebenenfalls vernetzten, vinylaromatischen Monomer und eine Kernschale BK2 aus mindestens einem, gegebenenfalls vernetzten, C₂-C₈-Alkylacrylat, und die Propfhülle B2 bzw. B2' und B2"die Schichten BH1 und BH2 umfasst.

6. Verfahren nach einem der Ansprüche 1 bis 5, **dadurch gekennzeichnet, dass** in Schritt a2) der mindestens eine, vorzugsweise eine, Radikalfänger ausgewählt ist aus: Alkylphenolen, Alkoxyphenolen, sterisch gehinderten Thiophenolen, aromatischen Aminen, sterisch gehinderten Aminen und/oder Dialkylhydroxylaminen, und stabilisierten Radikalen.

7. Verfahren nach einem der Ansprüche 1 bis 6, **dadurch gekennzeichnet, dass** in Schritt a2) der mindestens eine, vorzugsweise eine, Radikalfänger wasserlöslich ist und bei 20°C eine Löslichkeit von mindestens 0,5 g/l Wasser, bevorzugt von mindestens 3 g/l Wasser, besitzt.

8. Verfahren nach einem der Ansprüche 1 bis 7, **dadurch gekennzeichnet, dass** in Schritt a2) der mindestens eine, vorzugsweise eine, Radikalfänger N,N-Di-C₁-C₆-alkylhydroxylamin, bevorzugt N,N-Di-ethylhydroxylamin (DEHA), 4-tert-Butylbrenzcatechin (TBC), ein sterisch gehindertes Thiophenol (z.B. Lowinox^{®} TBM-6), ein Alkoxyphenol, insbesondere 4-Methoxyphenol, oder 4-Hydroxy-2,2,6,6-tetramethylpiperidinyloxyl (4-Hydroxy-TEMPO) ist.

9. Verfahren nach einem der Ansprüche 1 bis 8, **dadurch gekennzeichnet, dass** in Schritt a2) der mindestens eine, vorzugsweise eine, Radikalfänger ein N,N-Di-C₁-C₆-alkylhydroxylamin, bevorzugt N,N-Di-ethylhydroxylamin (DEHA), ist.

10. Verfahren nach einem der Ansprüche 1 bis 9, **dadurch gekennzeichnet, dass** in Schritt a2) der mindestens eine, vorzugsweise eine, Radikalfänger 0,01 bis 0,80 Gew.-%, bevorzugt 0,02 bis 0,60 Gew.-%, bezogen auf die Gesamtmenge der Dispersion des Pfropfcopolymers B, eingesetzt wird.

11. Verfahren nach einem der Ansprüche 1 bis 10, **dadurch gekennzeichnet, dass** in Schritt a2) die Zugabe des Radikalfängers erfolgt, wenn die Menge an Restmonomer B22, insbesondere Acrylnitril, in der wässrigen Phase > 25 ppm, bevorzugt > 50 ppm, besonders bevorzugt > 100 ppm beträgt.

12. Verfahren nach einem der Ansprüche 1 bis 11, **dadurch gekennzeichnet, dass** in Schritt a2) die Zugabe des Radikalfängers 0 bis 90 Minuten nach Beendigung der letzten Monomer-Zugabe in Schritt a1) erfolgt.

13. Verfahren nach einem der Ansprüche 1 bis 12, **dadurch gekennzeichnet, dass** in Schritt b) die Fällung des Pfropfcopolymer-B-Latex bei einer Temperatur von 40 bis 90°C, bevorzugt 50 bis 90°C, erfolgt.

14. Verfahren nach einem der Ansprüche 1 bis 13, **dadurch gekennzeichnet, dass** in Schritt c) die Sinterung der Fällungsmischung bei einer Temperatur von 90 bis 145 °C, insbesondere 90 bis 140°C, für 15 bis 90 Minuten, bevorzugt 15 bis 75 Minuten, erfolgt.

15. Pfropfcopolymer B, erhalten durch ein Verfahren gemäß einem der Ansprüche 1 bis 14.

16. Verfahren zur Herstellung einer thermoplastischen Formmasse - enthaltend mindestens ein Pfropfcopolymer B gemäß Anspruch 15, und mindestens ein, vorzugsweise kautschukfreies, thermoplastisches Vinylaromat-Copolymer A, optional mindestens eine weitere polymere Komponente C ausgewählt aus Polycarbonaten, Polyamiden und Polyestern, und optional ein oder mehrere Additive und/oder Hilfsmittel D - durch Mischen der Komponenten, vorzugsweise in der Schmelze.

17. Thermoplastische Formmasse, erhalten durch ein Verfahren gemäß Anspruch 16.

## Claims

1. Process for the preparation of at least one graft copolymer B comprising:
B1: 40 to 90% by weight, based on the graft copolymer B, of at least one graft base B1 obtained by emulsion polymerization of:
B11 50 to 100% by weight, based on the graft base B1, of at least one monomer B11 selected from C₁-C₈ alkyl (meth)acrylate and butadiene;
B12 0 to 10% by weight, based on the graft base B1, of at least one multifunctional crosslinking monomer B12;
B13 0 to 50% by weight, based on the graft base B1, of at least one further monomer B13 selected from styrene, alpha-methylstyrene, C₁-C₄-alkylstyrene, acrylonitrile, methacrylonitrile, isoprene, chloroprene, methyl methacrylate, alkylene glycol di(meth)acrylate and vinyl methyl ether;
wherein the sum of B11, B12 and B13 is 100% by weight; and
B2: 10 to 60% by weight, based on the graft copolymer B, of at least one graft shell B2 which - in the presence of the at least one graft base B1 - is obtained by emulsion polymerization of:
B21 50 to 100% by weight, based on the graft shell B2, of at least one vinylaromatic monomer B21 selected from styrene, alpha-methylstyrene or mixtures of styrene and at least one further monomer selected from alpha-methylstyrene, p-methylstyrene and C₁-C₈ alkyl (meth)acrylate; and
B22 0 to 50% by weight, based on the graft shell B2, of at least one monomer B22 selected from acrylonitrile or mixtures of acrylonitrile and at least one further monomer selected from methacrylonitrile, acrylamide, vinyl methyl ether, anhydrides of unsaturated carboxylic acids and imides of unsaturated carboxylic acids;
wherein the sum of B21 and B22 is 100% by weight; and
wherein at least one graft shell B2 is obtained by emulsion polymerization of 50 to 95% by weight of at least one monomer B21 and 5 to 50% by weight of at least one monomer B22;
wherein the sum of the at least one graft base B1 and the at least one graft shell B2 is 100% by weight; and wherein
the process comprises the following steps:
a) preparation of a latex of the at least one graft copolymer B comprising:
a1) addition and emulsion polymerization of monomers B21 and B22 in the presence of the at least one graft base B1 to form the at least one graft shell B2; and
a2) after completion of the last monomer addition in step a1), addition of at least one radical scavenger;
b) precipitating the graft copolymer B latex obtained in step a) at a temperature of 30 to 95 °C, wherein the graft copolymer B latex is mixed with at least one precipitation solution PS, thereby forming a precipitation mixture;
c) sintering of the precipitation mixture obtained in step b) at a temperature of 85 to 150 °C, preferably for 15 to 90 minutes,
wherein the temperature in step c) is at least 5 °C higher than the temperature in step b);
d) optionally cooling of the sintered precipitation mixture from step c), preferably to a temperature of 20 to 90°C;
e) mechanical dewatering of the sintered precipitation mixture obtained in step c) or d), wherein a graft copolymer B with a water content equal to or less than 50% by weight is obtained;
f) optionally washing the graft copolymer B obtained in step e);
g) optionally drying the graft copolymer B obtained in step e) or f).

2. Process according to claim 1, **characterized in that** the at least one graft base B1 is obtained by emulsion polymerization of:
B11: 80 to 99.9% by weight, based on the graft base B1, of at least one C₁-C₈ alkyl (meth)acrylate as monomer B11;
B12: 0.1 to 10% by weight, based on the graft base B1, of at least one polyfunctional crosslinking monomer B12;
B13: 0 to 19.9% by weight, based on the graft base B1, of at least one further monomer selected from styrene, alpha-methylstyrene, C₁-C₄ alkylstyrene, acrylonitrile, methacrylonitrile, isoprene, chloroprene, methyl methacrylate, alkylene glycol di(meth)acrylate and vinyl methyl ether;
wherein the sum of B11, B12 and B13 is equal to 100% by weight.

3. Process according to claim 1 or 2, **characterized in that** the at least one graft copolymer B contains:
B1: 50 to 70% by weight, based on the graft copolymer B, of exactly one graft base B1; and
B2: 30 to 50% by weight, based on the graft copolymer B, of exactly one graft shell B2 obtained by emulsion polymerization - in the presence of the graft base B1 - of:
B21: 50 to 95% by weight, based on the graft shell B2, of at least one vinylaromatic monomer B21 selected from styrene, (alpha)-methylstyrene or mixtures of styrene with (alpha)-methylstyrene or methyl (meth)acrylate; and
B22: 5 to 50% by weight, based on the graft shell B2, of at least one monomer B22 selected from acrylonitrile or mixtures of acrylonitrile and methacrylonitrile;
wherein the total sum of graft base B1 and graft shell B2 is 100% by weight, and wherein the latex of the graft copolymer B obtained in step a) has a particle size in the range from 50 to 150 nm as determined by light scattering.

4. Process according to claim 1 or 2, **characterized in that** the graft copolymer B contains:
B1: 50 to 70% by weight, based on the graft copolymer B, of at least one graft base B1; and
B2': 10 to 30% by weight, based on the graft copolymer B, of at least one graft shell B2' obtained by emulsion polymerization - in the presence of graft base B1 - of:
B21': 100% by weight, based on graft shell B2', of at least one vinylaromatic monomer B21 selected from styrene, (alpha)-methylstyrene or a mixture of styrene and at least one other monomer selected from (alpha)-methylstyrene, p-methylstyrene and C₁-C₄ alkyl (meth)acrylate; and
B2": 20 to 40% by weight, based on the graft copolymer B, of at least one graft shell B2" obtained by emulsion polymerization - in the presence of graft base B1 grafted with B2' - of:
B21": 65 to 90% by weight, based on the graft shell B2", of at least one vinylaromatic monomer B21" selected from styrene, (alpha)-methylstyrene or mixtures of styrene and (alpha)-methylstyrene or methyl (meth)acrylate; and
B22": 10 to 35% by weight, based on the graft shell B2", of at least one monomer B22" selected from acrylonitrile or mixtures of acrylonitrile and methacrylonitrile;
wherein the total sum of graft base B1, graft shell B2' and graft shell B2" is 100% by weight, and wherein the latex of the graft copolymer B obtained in step a) has a particle size in the range from 250 to 700 nm as determined by light scattering.

5. Process according to one of claims 1, 2 or 4, **characterized in that** the graft copolymer B has a core-shell structure BS, BK1, BK2, BH1, BH2, wherein the graft base B1 comprises: optionally an inner core BS of at least one, optionally crosslinked, C₂-C₈ alkyl acrylate, an inner core BK1 or - if BS is present - a core shell BK1 consisting of at least one, optionally crosslinked, vinylaromatic monomer and a core shell BK2 of at least one, optionally crosslinked, C₂-C₈ alkyl acrylate, and the graft shell B2 or B2' and B2" comprises the layers BH1 and BH2.

6. Process according to one of claims 1 to 5, **characterized in that** in step a2) the at least one, preferably one, radical scavenger is selected from: alkylphenols, alkoxyphenols, sterically hindered thiophenols, aromatic amines, sterically hindered amines and/or dialkylhydroxylamines, and stabilized radicals.

7. Process according to one of claims 1 to 6, **characterized in that** in step a2) the at least one, preferably one, radical scavenger is water-soluble and has a solubility of at least 0.5 g/l of water, preferably of at least 3 g/l of water, at 20 °C.

8. Process according to one of claims 1 to 7, **characterized in that** in step a2) the at least one, preferably one, radical scavenger N,N-di-C₁-C₆-alkylhydroxylamine, preferably N,N-di-ethylhydroxylamine (DEHA), 4-tert-butylpyrocatechol (TBC), is a sterically hindered thiophenol (e.g. Lowinox^{®} TBM-6), an alkoxyphenol, in particular 4-methoxyphenol, or 4-hydroxy-2,2,6,6-tetramethylpiperidinyloxyl (4-hydroxy-TEMPO).

9. Process according to one of claims 1 to 8, **characterized in that** in step a2) the at least one, preferably one, radical scavenger is an N,N-di-C₁-C₆-alkylhydroxylamine, preferably N,N-di-ethylhydroxylamine (DEHA).

10. Process according to one of claims 1 to 9, **characterized in that** in step a2) the at least one, preferably one, radical scavenger is used in an amount of from 0.01 to 0.80% by weight, preferably from 0.02 to 0.60% by weight, based on the total amount of the dispersion of the graft copolymer B.

11. Process according to one of claims 1 to 10, **characterized in that** the radical scavenger is added in step a2) when the amount of residual monomer B22, in particular acrylonitrile, in the aqueous phase is > 25 ppm, preferably > 50 ppm, particularly preferably > 100 ppm.

12. Process according to one of claims 1 to 11, **characterized in that** in step a2) the radical scavenger is added 0 to 90 minutes after the end of the last monomer addition in step a1).

13. Process according to one of claims 1 to 12, **characterized in that** in step b) the precipitation of the graft copolymer B latex takes place at a temperature of 40 to 90 °C, preferably 50 to 90 °C.

14. Process according to one of claims 1 to 13, **characterized in that** in step c) the precipitation mixture is sintered at a temperature of 90 to 145 °C, in particular 90 to 140 °C, for 15 to 90 minutes, preferably 15 to 75 minutes.

15. Graft copolymer B obtained by a process according to any one of claims 1 to 14.

16. Process for preparing a thermoplastic molding composition - comprising at least one graft copolymer B according to claim 15, and at least one, preferably rubber-free, thermoplastic vinylaromatic copolymer A, optionally at least one further polymeric component C selected from polycarbonates, polyamides and polyesters, and optionally one or more additives and/or auxiliaries D - by mixing the components, preferably in the melt.

17. Thermoplastic molding composition obtained by a process according to claim 16.

## Revendications

1. Procédé de préparation d'au moins un copolymère greffé B contenant :
B1 : 40 à 90 % en poids, par rapport au copolymère greffé B, d'au moins une base de greffage B1, obtenue par polymérisation en émulsion de :
B11 50 à 100 % en poids, par rapport à la base de greffage B1, d'au moins un monomère B11 choisi parmi le (méth)acrylate d'alkyle en C₁-C₈ et le butadiène ;
B12 0 à 10 % en poids, par rapport à la base de greffage B1, d'au moins un monomère de réticulation multifonctionnel B12 ;
B13 0 à 50 % en poids, par rapport à la base de greffage B1, d'au moins un autre monomère B13 choisi parmi le styrène, l'alpha-méthylstyrène, l'alkylstyrène en C₁-C₄, l'acrylonitrile, le méthacrylonitrile, l'isoprène, le chloroprène, le méthacrylate de méthyle, le di(méth)acrylate d'alkylèneglycol et le vinyl méthyl éther ;
la somme de B11, B12 et B13 étant égale à 100 % en poids ; et
B2 : 10 à 60 % en poids, par rapport au copolymère greffé B, d'au moins une enveloppe de greffage B2, qui est obtenue - en présence de ladite au moins une base de greffage B1 - par polymérisation en émulsion de :
B21 50 à 100 % en poids, par rapport à l'enveloppe de greffage B2, d'au moins un monomère vinylaromatique B21, choisi parmi le styrène, l'alpha-méthylstyrène ou des mélanges de styrène et d'au moins un autre monomère choisi parmi l'alpha-méthylstyrène, le p-méthylstyrène et le (méth)acrylate d'alkyle en C₁-C₈ ; et
B22 0 à 50 % en poids, par rapport à l'enveloppe de greffage B2, d'au moins un monomère B22 choisi parmi l'acrylonitrile ou des mélanges d'acrylonitrile et d'au moins un autre monomère choisi parmi le méthacrylonitrile, l'acrylamide, le vinyl méthyl éther, des anhydrides d'acides carboxyliques insaturés et des imides d'acides carboxyliques insaturés ;
la somme de B21 et B22 étant égale à 100 % en poids ; et
au moins une enveloppe de greffage B2 étant obtenue par polymérisation en émulsion de 50 à 95 % en poids d'au moins un monomère B21 et de 5 à 50 % en poids d'au moins un monomère B22 ;
la somme de ladite au moins une base de greffage B1 et de ladite au moins une enveloppe de greffage B2 étant égale à 100 % en poids ; et
le procédé comprenant les étapes suivantes :
a) préparation d'un latex de ledit au moins un copolymère greffé B comprenant :
a1) l'addition et la polymérisation en émulsion de monomères B21 et B22 en présence de ladite au moins une base de greffage B1 pour former ladite au moins une enveloppe de greffage B2 ; et
a2) après la fin de la dernière addition de monomère dans l'étape a1), l'addition d'au moins un capteur de radicaux ;
b) précipitation du latex de copolymère greffé B obtenu dans l'étape a) à une température de 30 à 95 °C, le latex de copolymère greffé B étant mélangé avec au moins une solution de précipitation PS, ce qui donne un mélange de précipitation ;
c) frittage du mélange de précipitation obtenu dans l'étape b) à une température de 85 à 150 °C, de préférence pendant 15 à 90 minutes,
la température de l'étape c) étant supérieure d'au moins 5 °C à la température de l'étape b) ;
d) éventuellement, refroidissement du mélange de précipitation fritté de l'étape c), de préférence à une température de 20 à 90 °C
e) déshydratation mécanique du mélange de précipitation fritté obtenu dans l'étape c) ou d), ce qui permet d'obtenir un copolymère greffé B ayant une teneur en eau égale ou inférieure à 50 % en poids ;
f) éventuellement, lavage du copolymère greffé B obtenu dans l'étape e) ;
g) éventuellement, sécher le copolymère greffé B obtenu dans l'étape e) ou f).

2. Procédé selon la revendication 1, **caractérisé en ce que** ladite au moins une base de greffage B1 est obtenue par polymérisation en émulsion de :
B11 : 80 à 99,9 % en poids, par rapport à la base de greffage B1, d'au moins un (méth)acrylate d'alkyle en C₁-C₈ comme monomère B11 ;
B12 : 0,1 à 10 % en poids, par rapport à la base de greffage B1, d'au moins un monomère de réticulation polyfonctionnel B12 ;
B13 : 0 à 19,9 % en poids, par rapport à la base de greffage B1, d'au moins un autre monomère choisi parmi le styrène, l'alpha-méthylstyrène, l'alkylstyrène en C₁-C₄, l'acrylonitrile, le méthacrylonitrile, l'isoprène, le chloroprène, le méthacrylate de méthyle, le di(méth)acrylate d'alky-lèneglycol et le vinyl méthyl éther ;
la somme de B11, B12 et B13 étant égale à 100 % en poids.

3. Procédé selon la revendication 1 ou 2, **caractérisé en ce que** ledit au moins un copolymère greffé B contient :
B1 : 50 à 70 % en poids, par rapport au copolymère greffé B, exactement d'une base de greffage B1 ; et
B2 : 30 à 50 % en poids, par rapport au copolymère greffé B, exactement d'une enveloppe de greffage B2 obtenue par polymérisation en émulsion - en présence de la base de greffage B1 - de :
B21 : 50 à 95 % en poids, par rapport à l'enveloppe de greffage B2, d'au moins un monomère vinylaromatique B21 choisi parmi le styrène, l'(alpha)-méthylstyrène ou des mélanges de styrène avec l'(alpha)-méthylstyrène ou le (méth)acrylate de méthyle ; et
B22 : 5 à 50 % en poids, par rapport à l'enveloppe de greffage B2, d'au moins un monomère B22 choisi parmi l'acrylonitrile ou des mélanges d'acrylonitrile et de méthacrylonitrile ;
la somme totale de la base de greffage B1 et de l'enveloppe de greffage B2 étant de 100 % en poids, et le latex du copolymère greffé B obtenu dans l'étape a) présentant une taille de particules déterminée par diffusion de la lumière dans la plage de 50 à 150 nm.

4. Procédé selon la revendication 1 ou 2, **caractérisé en ce que** le copolymère greffé B contient :
B1 : 50 à 70 % en poids, par rapport au copolymère greffé B, d'au moins une base de greffage B1 ; et
B2' : 10 à 30 % en poids, par rapport au copolymère greffé B, d'au moins une enveloppe de greffage B2' obtenue par polymérisation en émulsion - en présence de base de greffage B1 - de :
B21' : 100 % en poids, par rapport à l'enveloppe de greffage B2', d'au moins un monomère vinylaromatique B21 choisi parmi le styrène, l'(alpha)-méthylstyrène ou un mélange de styrène et d'au moins un autre monomère choisi parmi l'(alpha)-méthylstyrène, le p-méthylstyrène et le (méth)acrylate d'alkyle en C₁-C₄ ; et
B2" : 20 à 40 % en poids, par rapport au copolymère greffé B, d'au moins une enveloppe de greffage B2", obtenue par polymérisation en émulsion - en présence d'une base de greffage B1 greffé avec B2' - de :
B21" : 65 à 90 % en poids, par rapport à l'enveloppe de greffage B2", d'au moins un monomère vinylaromatique B21" choisi parmi le styrène, l'(alpha)-méthylstyrène ou des mélanges de styrène et d'(alpha)-méthylstyrène ou de (méth)acrylate de méthyle ; et
B22" : 10 à 35 % en poids, par rapport à l'enveloppe de greffage B2", d'au moins un monomère B22" choisi parmi l'acrylonitrile ou des mélanges d'acrylonitrile et de méthacrylonitrile ;
la somme totale de la base de greffage B1, de l'enveloppe de greffage B2' et de l'enveloppe de greffage B2" étant de 100 % en poids, et le latex du copolymère greffé B obtenu dans l'étape a) présentant une taille de particules déterminée par diffusion de la lumière dans la plage de 250 à 700 nm.

5. Procédé selon l'une des revendications 1, 2 ou 4, **caractérisé en ce que** le copolymère greffé B présente une structure noyau-coquille BS, BK1, BK2, BH1, BH2, la base de greffage B1 comprenant : éventuellement un noyau interne BS constitué d'au moins un acrylate d'alkyle en C₂-C₈, éventuellement réticulé, un noyau interne BK1 ou - si BS est présent - une enveloppe de noyau BK1 constituée d'au moins un monomère vinylaromatique, éventuellement réticulé, et une enveloppe de noyau BK2 constituée d'au moins un acrylate d'alkyle en C₂-C₈, éventuellement réticulé, et l'enveloppe de greffage B2 ou B2' et B2" comprend les couches BH1 et BH2.

6. Procédé selon l'une des revendications 1 à 5, **caractérisé en ce que**, dans l'étape a2), ledit au moins un, de préférence un, capteur de radicaux est choisi parmi : des alkylphénols, des alcoxyphénols, des thiophénols stériquement encombrés, des amines aromatiques, des amines stériquement encombrées et/ou des dialkylhy-droxylamines, et des radicaux stabilisés.

7. Procédé selon l'une des revendications 1 à 6, **caractérisé en ce que**, dans l'étape a2), ledit au moins un, de préférence un, capteur de radicaux est soluble dans l'eau et possède une solubilité à 20 °C d'au moins 0,5 g/l d'eau, de préférence d'au moins 3 g/l d'eau.

8. Procédé selon l'une des revendications 1 à 7, **caractérisé en ce que**, dans l'étape a2), l'au moins un, de préférence un, capteur de radicaux N,N-di-alkyl en C₁-C₆-hydroxylamine, de préférence N,N-di-éthylhydroxylamine (DEHA), le 4-tert-butylbrenz-catéchol (TBC), est un thiophénol stériquement encombré (par ex. Lowinox^{®} TBM-6), un alcoxyphénol, en particulier le 4-méthoxyphénol, ou le 4-hydroxy-2,2,6,6-tétra-méthylpipéridinyloxy (4-hydroxy-TEMPO).

9. Procédé selon l'une des revendications 1 à 8, **caractérisé en ce que**, dans l'étape a2), ledit au moins un, de préférence un, capteur de radicaux est une N,N-di-alkyl en C₁-C₆₋hydroxylamine, de préférence la N,N-diéthylhydroxylamine (DEHA).

10. Procédé selon l'une des revendications 1 à 9, **caractérisé en ce que**, dans l'étape a2), ledit au moins un, de préférence un, capteur de radicaux est utilisé à raison de 0,01 à 0,80 % en poids, de préférence de 0,02 à 0,60 % en poids, par rapport à la quantité totale de la dispersion du copolymère greffé B.

11. Procédé selon l'une des revendications 1 à 10, **caractérisé en ce que**, dans l'étape a2), l'addition du capteur de radicaux a lieu lorsque la quantité de monomère résiduel B22, en particulier d'acrylonitrile, dans la phase aqueuse est > 25 ppm, de préférence > 50 ppm, de manière particulièrement préférée > 100 ppm.

12. Procédé selon l'une des revendications 1 à 11, **caractérisé en ce que**, dans l'étape a2), l'addition du capteur de radicaux a lieu de 0 à 90 minutes après la fin de la dernière addition de monomère dans l'étape a1).

13. Procédé selon l'une des revendications 1 à 12, **caractérisé en ce que**, dans l'étape b), la précipitation du latex de copolymère greffé B est réalisée à une température de 40 à 90 °C, de préférence de 50 à 90 °C.

14. Procédé selon l'une des revendications 1 à 13, **caractérisé en ce que**, dans l'étape c), le frittage du mélange de précipitation est réalisé à une température de 90 à 145 °C, en particulier de 90 à 140 °C, pendant 15 à 90 minutes, de préférence 15 à 75 minutes.

15. Copolymère greffé B obtenu par un procédé selon l'une des revendications 1 à 14.

16. Procédé de préparation d'une masse de moulage thermoplastique - contenant au moins un copolymère greffé B selon la revendication 15, et au moins un copolymère vinylaromatique thermoplastique A, de préférence exempt de caoutchouc, en option au moins un autre composant polymère C choisi parmi les polycarbonates, les polyamides et les polyesters, et en option un ou plusieurs additifs et/ou adjuvants D - par mélange des composants, de préférence à l'état fondu.

17. Masse de moulage thermoplastique obtenue par un procédé selon la revendication 16.
